# EUROPEAN PATENT SPECIFICATION

(11) **EP 3 144 139 B1**
(45) Date of publication and mention of the grant of the patent: **23.06.2021**
(21) Application number: 15792735.1
(22) Date of filing: 18.05.2015
(51) Int. Cl.: B32B 5/28, B05D 7/00, B05D 7/24, B32B 27/30, D06M 11/46, D06M 15/256, D06M 15/263, D06M 15/643

(54) **NON-FLAMMABLE SHEET AND PRODUCTION METHOD THEREFOR**
NICHT ENTFLAMMBARE FOLIE UND HERSTELLUNGSVERFAHREN DAFÜR
FEUILLE ININFLAMMABLE ET SON PROCÉDÉ DE PRODUCTION

(30) Priority: 16.05.2014 JP 2014102857
(43) Date of publication of application: 22.03.2017
(73) Proprietor: Toppan Printing Co., Ltd., Taito-ku, Tokyo 110-0016 (JP); Daikin Industries, Ltd., Osaka-shi, Osaka 530-8323 (JP)
(72) Inventor: TAKENAKA Satoshi, Tokyo 108-8536 (JP); ISHIKAWA Takuji, Settsu-shi Osaka 566-8585 (JP); KATOU Masami, Osaka-shi Osaka 530-8323 (JP); YAGI Shouichi, Osaka-shi Osaka 530-8323 (JP); IMOTO Katsuhiko, Settsu-shi Osaka 566-8585 (JP)
(74) Representative: TBK
(86) International application number: PCT/JP2015/064238
(87) International publication number: WO 2015/174545

(56) References cited:
- WO-A1-2013/011947
- WO-A1-2013/129488
- JP-A- H07 216 748
- JP-A- H10 306 189
- JP-A- H11 333 992
- JP-A- 2000 229 984
- JP-A- 2008 144 024
- JP-A- 2009 228 416
- JP-A- 2012 140 753
- US-A- 4 370 376
- None

## Description

### TECHNICAL FIELD

The present invention relates to a nonflammable sheet, particularly to a technique utilizing a fluorocarbon resin suitably used for an architectural film material which can be used as a tent film when a large space building is built.

The present application claims priority based on Japanese Patent Application No. 2014-102857 filed in Japan on May 16, 2014, the contents of which are hereby incorporated herein.

### BACKGROUND ART

Conventionally, as an architectural film material which can be used as a tent film when a large space building is built, a film structure material (sheet material) formed by impregnating a heat resistant woven fabric formed of a glass fiber with a fluorine-containing resin such as a polytetrafluoroethylene resin (hereinafter, also referred to as PTFE) several times and repeating firing is known (Patent Document 1).

### PRIOR ART DOCUMENTS

### PATENT DOCUMENTS

[Patent Document 1] Japanese Patent No. 3274078

### DISCLOSURE OF INVENTION

### PROBLEMS TO BE SOLVED BY THE INVENTION

However, a sheet material using PTFE needs a firing step, and there is a demand to eliminate this manufacturing step. A sheet material only formed of a fluorocarbon resin such as PTFE has a hard resin layer, and lacks flexibility. Therefore, there is a demand to impart flexibility thereto from the viewpoint of manufacturing processing suitability. At the same time, there is a demand to further improve weather resistance, a heat-shielding property, hydrophilicity, a nonflammable property, chemical resistance, flexibility, and a handling property.

The present invention has been achieved in view of the above circumstances, and aims to achieve the following object.
1. To maintain or improve weather resistance, a heat-shielding property, hydrophilicity, a nonflammable property, chemical resistance, flexibility, and a handling property.
2. To reduce manufacturing cost

### MEANS FOR SOLVING THE PROBLEMS

A nonflammable sheet as defined in claim 1 has solved the above problems.

In the present invention, the first fluorocarbon resin can contain titanium oxide.

In the present invention, the thickness of the nonflammable sheet is more preferably about from 100 to 200 µm.

A method for manufacturing the nonflammable sheet of the present invention is defined in claim 7.
Further beneficial developments are set forth in dependent claims.

In the nonflammable sheet of the present invention, by forming a resin layer including at least a first fluorocarbon resin containing a vinylidene fluoride copolymer, an acrylic copolymer, water, and titanium oxide, and a second fluorocarbon resin containing a vinylidene fluoride polymer, a siloxane polymer, and a crosslinked acrylic polymer on a surface of a woven fabric formed of a nonflammable fiber, a nonflammable property is ensured due to a fluorocarbon resin, manufacturing by coating is possible due to an emulsion containing an acrylic resin, and manufacturing is possible without firing due to a drying step to such an extent that water is blown away. This makes it possible to largely reduce cost and energy required for manufacturing.

Furthermore, weather resistance, a heat-shielding property, hydrophilicity, a nonflammable property, chemical resistance, flexibility, a handling property, and a surface-printing characteristic can be improved.

Here, in the nonflammable sheet of the present invention, the first fluorocarbon resin can be ZEFFLE (Daikin Industries, Ltd., trademark), and the second fluorocarbon resin can be SIFCLEAR (JSR Corporation, trademark).

The first fluorocarbon resin does not necessarily contain titanium oxide.

The present invention can maintain flexibility and improve a handling property and a surface-printing characteristic due to the thickness of about 100 to 200 µm.

In a method for manufacturing the nonflammable sheet of the present invention, by forming a resin layer by impregnating a woven fabric formed of a nonflammable fiber with a resin including at least a first fluorocarbon resin containing a vinylidene fluoride copolymer, an acrylic copolymer, water, and titanium oxide, and a second fluorocarbon resin containing a vinylidene fluoride polymer, a siloxane polymer, and a crosslinked acrylic polymer, a nonflammable property is ensured due to a fluorocarbon resin, manufacturing by coating is possible due to an emulsion containing an acrylic resin, and manufacturing is possible without firing due to a drying step to such an extent that water is blown away. This makes it possible to reduce the number of steps required for manufacturing, to reduce manufacturing time, to reduce cost required for a manufacturing apparatus, and to largely reduce manufacturing cost and required energy. Furthermore, weather resistance, a heat-shielding property, hydrophilicity, a nonflammable property, chemical resistance, flexibility, a handling property, and a surface-printing characteristic can be improved.

In the present invention, while a long woven fabric formed of a tensed nonflammable fiber is continuously supplied, the woven fabric is impregnated with the above fluorocarbon resin, and both surfaces thereof are then scraped by a doctor blade or the like, and are dried. A nonflammable sheet can be thereby manufactured easily.

### EFFECTS OF THE INVENTION

The present invention can ensure a nonflammable property, makes manufacturing by coating possible, makes manufacturing without firing possible, can reduce the number of steps required for manufacturing, can largely reduce manufacturing time, can reduce cost required for a manufacturing apparatus, can reduce manufacturing cost and required energy, and can improve weather resistance, a heat-shielding property, hydrophilicity, a nonflammable property, chemical resistance, flexibility, a handling property, and a surface-printing characteristic.

### BRIEF DESCRIPTION OF THE DRAWINGS

FIG. 1 is a schematic cross-sectional view illustrating an embodiment of a nonflammable sheet according to the present invention.
FIG. 2 is a schematic view illustrating a manufacturing apparatus in an embodiment of a method for manufacturing a nonflammable sheet according to the present invention.
FIG. 3 is a graph indicating characteristics of a second fluorocarbon resin in an embodiment of the present invention.

### EMBODIMENTS FOR CARRYING OUT THE INVENTION

Hereinafter, embodiments of a nonflammable sheet according to the present invention and a method for manufacturing the same will be described based on the drawings.

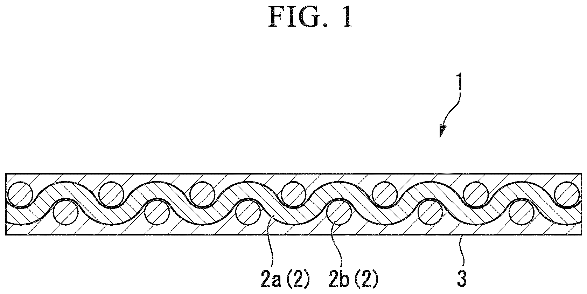

FIG. 1 is a cross-sectional view illustrating a nonflammable sheet in the present embodiment. In FIG. 1, reference symbol 1 represents the nonflammable sheet.

As illustrated in FIG. 1, for example, the nonflammable sheet 1 in the present embodiment includes a plainly woven nonflammable fiber woven fabric 2 formed of a warp 2a and a weft 2b and a resin layer 3 formed on each of a front surface and a back surface of the nonflammable fiber woven fabric 2.

The nonflammable fiber woven fabric 2 can be formed of a glass fiber, an aramid fiber, a carbon fiber, a metal fiber, or the like having a thickness of about 0.1 so as to be applicable to an architectural film material, and needs to maintain strength of the nonflammable sheet 1 itself, weather resistance thereof, a heat-shielding property thereof, hydrophilicity thereof, a nonflammable property thereof, chemical resistance thereof, flexibility thereof, a handling property thereof, and a surface-printing characteristic thereof. In the present embodiment, the nonflammable fiber woven fabric 2 is preferably formed of a glass fiber.

The resin layer 3 is formed of a fluorine-containing resin. As described below, the resin layer 3 is formed of a first fluorocarbon resin and a second fluorocarbon resin, and is formed by impregnating the nonflammable fiber woven fabric (glass fiber woven fabric) 2 therewith.

The nonflammable sheet 1 in which the resin layer 3 has been formed is set so as to have a thickness of about 100 to 200 µm.

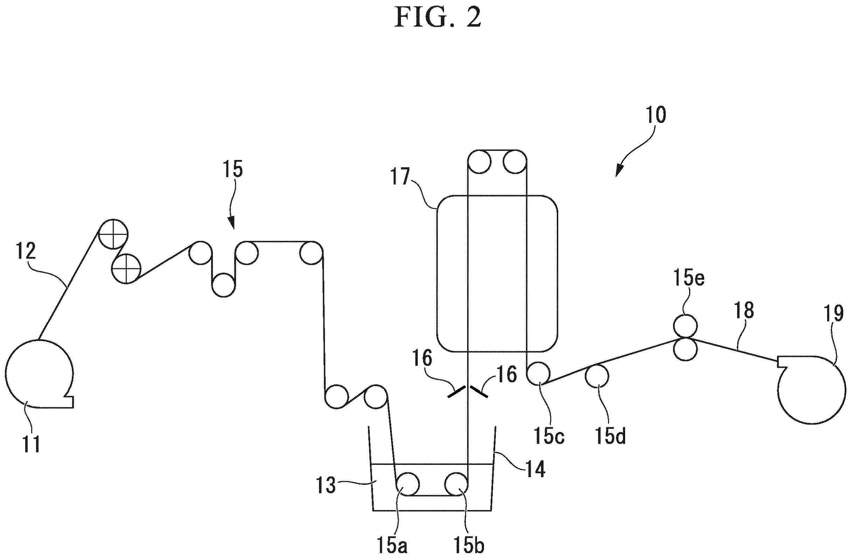

FIG. 2 is a schematic diagram illustrating an apparatus for manufacturing a nonflammable sheet in the present embodiment. In FIG. 2, reference symbol 10 represents the apparatus for manufacturing a nonflammable sheet.

As illustrated in FIG. 2, in the apparatus for manufacturing a nonflammable sheet 10, a delivery roll 11 for delivering the nonflammable fiber woven fabric 2 as a substrate and an impregnation tank 14 filled with a fluorocarbon resin 13 on a downstream side of the delivery roll 11 are disposed. The nonflammable fiber woven fabric 2 wound around the delivery roll 11 is supplied through a tension roll 15, is delivered to a side of a roll 15b disposed in the fluorocarbon resin 13 of the impregnation tank 14 through a roll 15a, and has the fluorocarbon resin 13 applied thereon. A pair of doctor blades 16 is disposed on an upper side of the impregnation tank 14 to scrape an excessive amount of the fluorocarbon resin 13. A drying unit 17 capable of setting a treatment temperature for blowing away excessive water is disposed on an upper side of the doctor blades 16.

The drying unit 17 makes a heating treatment at a temperature of about 150°C possible, and makes the resin layer 3 and the glass fiber woven fabric 2 integrated with each other. On a downstream side of the drying unit 17, rolls 15c, 15d, and 15e for delivering a nonflammable sheet 18 which has been subjected to drying and a winding roll 19 for winding the nonflammable sheet 18 which has passed through the rolls 15c, 15d, and 15e are disposed.

The nonflammable sheet 1 in the present embodiment is manufactured as follows. That is, the glass fiber woven fabric 2 wound around the delivery roll 11 is supplied through the tension roll 15, is delivered to a side of the roll 15b disposed in the resin liquid 13 of the impregnation tank 14, and has the fluorocarbon resin 13 applied thereon. Subsequently, the pair of doctor blades 16 scrapes an excessive amount of the fluorocarbon resin liquid 13 applied on a surface of the glass fiber woven fabric 2. Subsequently, the glass fiber woven fabric 2 having the fluorocarbon resin 13 applied thereon is delivered to the drying unit 17. The resin applied is dried at a temperature of about 150°C, and water is evaporated to manufacture the nonflammable sheet 1 without firing. The non-breathable nonflammable sheet 1 in which the resin layer 3 is formed on each of both surfaces thereof by impregnation, obtained in this way, has sufficient flexibility and excellent weather resistance while maintaining strength and wear resistance almost equal to a conventional product.

The application amount can be controlled by tension on the glass fiber woven fabric 2 by the tension roll 15, viscosity of the fluorocarbon resin liquid 13, and an angle formed by the doctor blades 16.

The fluorocarbon resin 13 serving as the resin layer 3 is prepared as follows.

As the first fluorocarbon resin, a resin containing a vinylidene fluoride copolymer, an acrylic copolymer, and titanium oxide is prepared. In this case, the first fluorocarbon resin may contain water or hydrous silicic acid.

As the second fluorocarbon resin, a resin containing a vinylidene fluoride polymer, a siloxane polymer, and a crosslinked acrylic polymer is prepared.

For example, these resins are adjusted at a predetermined ratio of 1:1, are diluted with water to obtain a predetermined viscosity (for example, 1500 cps), and are put into the impregnation tank 14.

Specifically, the first fluorocarbon resin is a composition containing ZEFFLE (Daikin Industries, Ltd., trademark) formed of a vinylidene fluoride copolymer and a (meth)acrylic copolymer and titanium oxide.

The first fluorocarbon resin is an aqueous dispersion of a fluorine-containing seed polymer particle, and is manufactured by a manufacturing method including:
step (I) for manufacturing an aqueous dispersion of a fluorine-containing polymer (A) particle by subjecting a monomer containing at least one fluoroolefin to aqueous dispersion polymerization in the presence of a compound (1) represented by formula (1); and
step (II) for manufacturing an aqueous dispersion of a fluorine-containing seed polymer (B) particle by subjecting an ethylenically unsaturated monomer to seed polymerization with the fluorine-containing polymer (A) particle in the aqueous dispersion of the fluorine-containing polymer (A) particle.

Here, the aqueous dispersion of the fluorine-containing polymer (A) particle is manufactured by subjecting a monomer containing at least one fluoroolefin to aqueous dispersion polymerization in the presence of the compound (1) represented by formula (1):

CH₂=CHCH₂-O-R (1)

(in the formula, R is an oxygen atom, a nitrogen atom, and/or a hydrocarbon group optionally having a polar group) in step (I).

R in the compound (I) represented by formula (1) is an oxygen atom, a nitrogen atom, and/or a hydrocarbon group optionally having a polar group. The hydrocarbon group R may have two or more kinds of an oxygen atom, a nitrogen atom, and a polar group. The hydrocarbon group R may be linear or branched. A molecular weight thereof is preferably from 45 to 5000.

The polar group may be at an end of the hydrocarbon group R or at an end of a branched chain. Examples of the polar group include a group represented by -L⁻M⁺ (L⁻ is SO₃⁻, OSO₃⁻, PO₃⁻, OPO₃⁻, COO⁻, or the like; M⁺ is a monovalent cation such as a lithium ion, a potassium ion, a sodium ion, a rubidium ion, a cesium ion, or an ammonium ion).

Preferable examples of a compound represented by formula (1) include: in formula (1),
a compound (2) in which R is represented by formula (2): 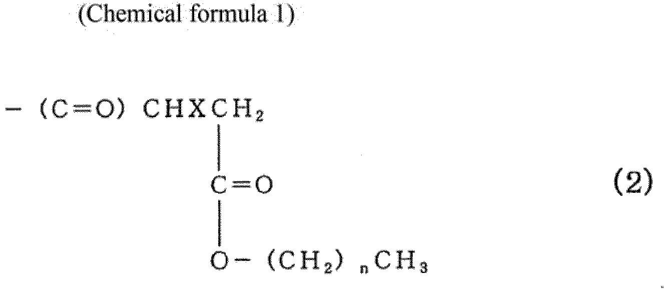 (in the formula, X is H or SO₃Y (Y is NH₄ or an alkali metal atom, for example, Na or K); n is an integer of 0 to 19); a compound (3) in which R is represented by formula (3):

-(AO)ₚ-X (3)

(in the formula, AO is a linear or branched oxyalkylene group having 2 to 4 carbon atoms; p is a positive integer; X is H or SO₃Y (Y is NH₄ or an alkali metal atom, for example, Na or K); when a plurality of AOs is present, the AOs may be the same as or different from each other, and may form two or more block structures; and
a compound (4) in which R is represented by formula (4): 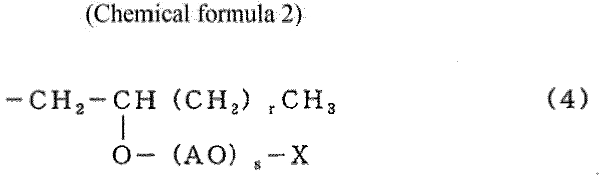 (in the formula, AO is a linear or branched oxyalkylene group having 2 to 4 carbon atoms; X is H or SO₃Y (Y is NH₄ or an alkali metal atom, for example, Na or K); r is an integer of 0 to 20; s is a positive integer; when a plurality of AOs is present, the AOs may be the same as or different from each other, and may form two or more block structures).

The compound (2) having R represented by formula (2) is preferably a compound represented by 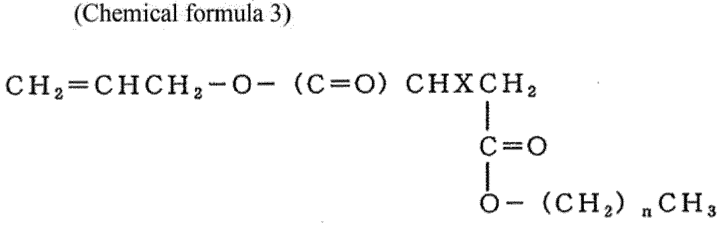 (in the formula, n is 11 or 12; X is the same as in formula (2)). Examples of a commercially available product include ELEMINOL JS-20 manufactured by Sanyo Kasei Co., Ltd.

The compound (3) having R represented by formula (3) is preferably a compound represented by

CH₂=CR¹-R² -O-(AO)ₚ-X

(in the formula, R¹ is a hydrogen atom or an alkyl group; R² is an alkylene group having 2 or more carbon atoms; AO is a linear or branched oxyalkylene group having 2 to 4 carbon atoms; p is a positive integer; X is H or SO₃Y (Y-is NH₄ or an alkali metal atom); when a plurality of AOs is present, the AOs may be the same as or different from each other, and may form two or more block structures).

R¹ is a hydrogen atom or an alkyl group, and is preferably an alkyl group having 1 to 10 carbon atoms, and particularly preferably a methyl group from the viewpoint of excellent stability of a dispersion obtained.

R² is an alkylene group having 2 or more carbon atoms, and may be linear or branched. Above all, an alkylene group having 2 to 10 carbon atoms is preferable, and a linear alkylene group having 2 to 4 carbon atoms is particularly preferable from the viewpoint of excellent stability of dispersion.

AO is a linear or branched oxyalkylene group having 2 to 4 carbon atoms, such as ethylene oxide (-CH₂CH₂O-), propylene oxide, butylene oxide, tetrahydrofuran, or - CH(CH₃)O-, and can be obtained by a method such as addition polymerization of an alkylene oxide. When AO is formed by addition polymerization of an alkylene oxide, AO is determined by an alkylene oxide added or the like. A polymerization form of an alkylene oxide added or the like is not limited, but may be homopolymerization of one kind of alkylene oxide, random copolymerization of two or more kinds of alkylene oxides, random copolymerization thereof, or random/block copolymerization thereof.

p is a positive integer, and is, for example, from 0 to 1,000, preferably from 1 to 200, and particularly preferably from 10 to 40.

The compound (3) is particularly preferably a compound represented by

CH₂=CR³ -R⁴-O-(BO)ₘ-(EO)ₙ-X

(in the formula, R³ is an alkyl group having 1 to 10 carbon atoms; R⁴ is a linear alkylene group having 2 to 10 carbon atoms; X is the same as in formula (1); BO is a butylene oxide unit; EO is a CH₂CH₂O unit or a CH(CH₃)O unit; m is an integer of 0 to 50; n is an integer of 0 to 100; m + n is an integer of 0 to 150).

Specific examples of the compound (3) include the following, but are not limited thereto.

A compound represented by CH₂=C(CH₃)CH₂CH₂-O-(BO)ₘ-(EO)ₙ-H or CH₂=C(CH₃)CH₂CH₂-O-(BO)ₘ-(EO)ₙ-SO₃NH₄
(in the formula, BO, EO, n, and m are the same as in the above) is preferable.

Examples of a commercially available product include LATEMUL PD-104 and PD-420 manufactured by Kao Corporation.

The compound (4) having R represented by formula (4) is preferably a compound represented by 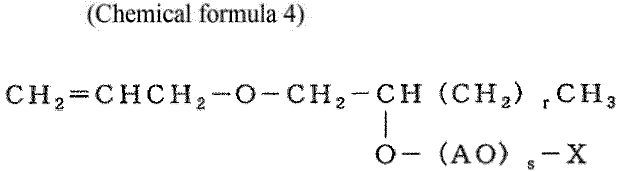 (in the formula, AO, X, r, and s are the same as in formula (4)). Description of AO and examples thereof are the same as in formula (3).

Examples of a commercially available product include Aqualon KH-10 manufactured by Dai-ichi Kogyo Seiyaku Co., Ltd.

Examples of a vinylidene fluoride copolymer contained in the first fluorocarbon resin include a VDF/TFE copolymer, a VDF/TFE/CTFE copolymer, a VDF/HFP copolymer, VDF/TFE/HFP copolymer, and a VDF/CTFE copolymer.

A fluoroolefin polymerized by the manufacturing method of the present invention is not particularly limited, but one or more kinds thereof can be used. Examples of a fluoroolefin include a perfluoroolefin such as tetrafluoroethylene (TFE), hexafluoropropylene (HFP), perfluoro (alkyl vinyl ether) (PAVE), or 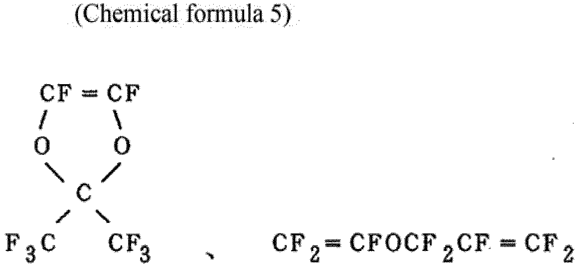 ; and
a non-perfluoroolefin such as chlorotrifluoroethylene (CTFE), vinyl fluoride (VF), vinylidene fluoride (VdF), trifluoroethylene, trifluoropropylene, pentafluoropropylene, tetrafluoropropylene, hexafluoroisobutene, 2,3,3,3-tetrafluoropropene, 1,3,3,3-tetrafluoropropene, or 1,1,3,3,3-pentafluoropropene.

Examples of PAVE include perfluoro (methyl vinyl ether) (PMVE), perfluoro (ethyl vinyl ether) (PEVE), and perfluoro (propyl vinyl ether) (PPVE).

In addition, a functional group-containing fluoroolefin monomer can be used. Examples of the functional group-containing fluoroolefin include a compound represented by formula (5):

CX¹₂=CX²-(Rf)ₘ₋Y¹ (5)

(in the formula, Y¹ is -OH, -COOH, -SO₂F, -SO₃M² (M² is a hydrogen atom, a NH₄ group, or an alkali metal), an alkoxycarbonyl group, a carboxylate, a carboxylate group, an epoxy group, or a cyano group; X¹ and X² are the same as or different from each other, and are each a hydrogen atom or a fluorine atom; Rf is a divalent fluorine-containing alkylene group having 1 to 40 carbon atoms or a divalent fluorine-containing alkylene group having 1 to 40 carbon atoms and containing an ether bond; m is 0 or 1).

Specific examples thereof include 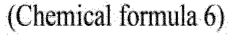 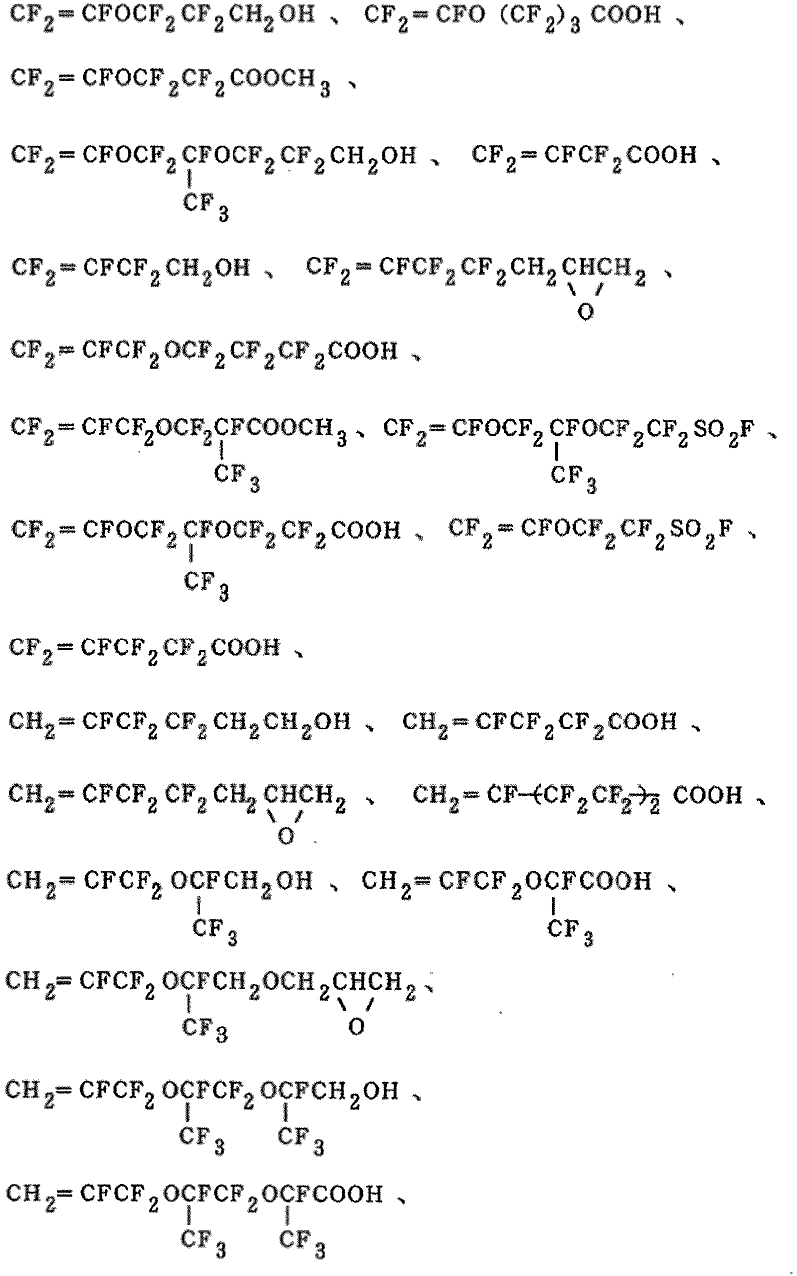 and

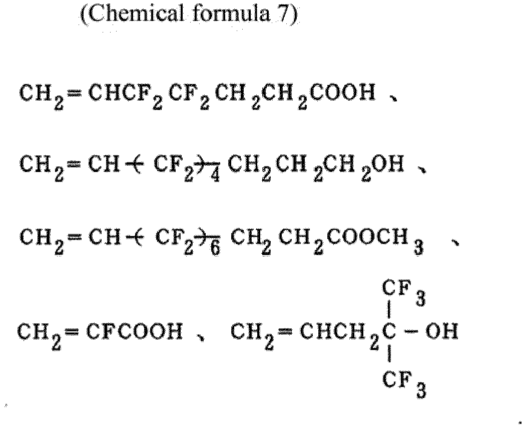

As the non-perfluoroolefin, an iodine-containing monomer can be used. Examples thereof include an iodide of perfluoroalkyl vinyl ether such as perfluoro (6,6-dihydro-6-iodo-3-oxa-1-hexene) or perfluoro (5-iodo-3-oxa-1-pentene) described in JP 5-63482 B or JP 62-12734 A.

In the present embodiment, a non-fluorine-containing monomer copolymerizable with a fluoroolefin may be used together.

In the present embodiment, aqueous dispersion polymerization is performed in the presence of the compound (1) (surfactant). Examples of the aqueous dispersion polymerization include emulsion polymerization and suspension polymerization. Emulsion polymerization is particularly suitable from the viewpoint of producing many polymer particles each having a small particle diameter. Emulsion polymerization applied in an initial stage of seed polymerization, that is, in manufacturing a seed particle is particularly suitable from the viewpoint of being able to produce more particles even when the amount of a surfactant in a fluorine-containing polymer obtained is the same.

For example, the amount of the compound (1) used is preferably from 10 to 5000 ppm, and more preferably from 20 to 4000 ppm with respect to the total amount of water in emulsion polymerization. The amount of the compound (1) of less than 10 ppm tends to reduce surface activity and to reduce the number of particles generated.

Emulsion polymerization proceeds sufficiently and stably even with single use of the compound (1). However, the compound (1) may be used in combination with another surfactant.

The other surfactant may be a fluorine-containing surfactant or a non-fluorine-containing (hydrocarbon) surfactant (except for the compound of formula (1) above).

The fluorine-containing surfactant is preferably a fluorine-containing anionic surfactant.

As the fluorine-containing anionic surfactant, a known surfactant can be used. Examples thereof include surfactants described in US 2007/0015864 A, US 2007/0015865 A, US 2007/0015866 A, US 2007/0276103 A, US 2007/0117914 A, US 2007/142541 A, US 2008/0015319 A, US 3250808, US 3271341, JP 2003-119204 A, WO 2005/042593 A, WO 2008/060461 A, WO 2007/046377 A, WO 2007/119526 A, WO 2007/046482 A, and WO 2007/046345 A.

Specific examples of the fluorine-containing surfactant which can be used together include F(CF₂)ₙCOOM, CF₃CF₂CF₂OCF(CF₃)CF₂OCF(CF₃)COOM, CF₃CF₂OCF(CF₃)CF₂OCF(CF₃)COOM, CF₃OCF(CF₃)CF₂OCF(CF₃)COOM, H(CF₂CF₂)₂CH₂OCF(CF₃)COOM, H(CF₂)ₘCOOM, C₆F₁₃CH₂CH₂SO₃M, F(CF₂CF₂)ₚCH₂CH₂SO₃M, and F(CF₂CF₂)_{q}CH₂CH₂SO₄M (in the formula, M is a monovalent cation; n is an integer of 2 to 5; m is an integer of 2 to 10; p is an integer of 2 to 10; q is an integer of 2 to 10).

Among these surfactants, a fluorine-containing surfactant having 6 or less carbon atoms is preferable, and a fluorine-containing anionic surfactant having 6 or less carbon atoms is particularly preferable from the viewpoint of being able to increase a concentration of a fluorine-containing polymer in a polymerization product liquid obtained and to produce a stable dispersion.

Examples of the non-fluorine-containing (hydrocarbon) surfactant include a hydrocarbon surfactant such as CH₃(CH₂)ᵣSO₃M, CH₃(CH₂)ₛSO₄M, CH₃(CH₂)ₜCOOM, H(CH₂)ᵤCOO(CH₂CH₂O)ᵥH, or (NaSO₃)CH((CH₂)_{w}CH₃)((CH₂)ₓCH₃) (in the formula, M is a monovalent cation; r is an integer of 2 to 16; s is an integer of 2 to 16; t is an integer of 2 to 16; u is an integer of 2 to 40; v is an integer of 2 to 45; w + x = 10 to 20).

For example, as for the amount of the other surfactant which can be used together, the total amount of the other surfactant and the compound (1) is preferably from 10 to 5000 ppm, and more preferably from 20 to 4000 ppm with respect to the total amount of water in emulsion polymerization. The total amount of the compound (1) and the other surfactant of less than 10 ppm tends to reduce surface activity and to reduce the number of particles generated.

Examples of the surfactant which can be used together further include a fluorine-containing reactive surfactant formed of a fluorine-containing compound having a radically polymerizable unsaturated bond and a hydrophilic group in a molecule thereof. When the fluorine-containing reactive surfactant is present in a reaction system during polymerization, the fluorine-containing reactive surfactant can constitute a part of a polymer chain of a polymer.

As the reactive surfactant, for example, a fluorine-containing compound described in JP 8-67795 A can be used.

A polymerization temperature is not particularly limited, but an optimum temperature is employed according to the kind of a polymerization initiator. However, when the temperature is too high, a monomer density is lowered easily in a gas phase, or a branching reaction of a polymer occurs, and a desired copolymer cannot be necessarily obtained. The temperature is preferably from 40 to 120°C, and more preferably from 50 to 100°C.

A monomer may be supplied continuously or sequentially.

As the polymerization initiator, an oil-soluble peroxide can be used. However, a peroxycarbonate such as diisopropyl peroxydicarbonate (IPP) or di-n-propyl peroxydicarbonate (NPP) as a typical oil-soluble initiator has a risk of explosion, is expensive, and easily causes a scale to adhere to a wall surface or the like of a polymerization tank during a polymerization reaction disadvantageously. In order to further reduce a compression permanent set of a fluoropolymer, a water-soluble radical polymerization initiator is preferably used. Preferable examples of the water-soluble radical polymerization initiator include an ammonium salt of persulfuric acid, perboric acid, a perchloric acid, perphosphoric acid, or percarbonic acid, a potassium salt thereof, and a sodium salt thereof. Ammonium persulfate and potassium persulfate are particularly preferable.

The addition amount of the polymerization initiator is not particularly limited. However, the amount to such an extent not to reduce a polymerization speed significantly (for example, concentration of several ppm with respect water) or more only needs to be added at once in an initial stage of polymerization, sequentially, or continuously. The upper limit is within a range capable of removing polymerization reaction heat from a surface of an apparatus.

In the manufacturing method of the present invention, a molecular weight-adjusting agent or the like may be further added. The molecular weight-adjusting agent may be added at once in an initial stage, continuously, or in increments.

Examples of the molecular weight-adjusting agent include an ester such as dimethyl malonate, diethyl malonate, methyl acetate, ethyl acetate, butyl acetate, or dimethyl succinate, isopentane, isopropanol, acetone, various mercaptans, carbon tetrachloride, cyclohexane, mono iodomethane, 1-iodomethane, 1-iodopropane, isopropyl iodide, diiodomethane, 1,2-diiodomethane, and 1,3-diiodopropane.

In addition, a buffering agent or the like may be added appropriately, but the amount thereof is preferably within a range not to impair an effect of the present invention.

A polymerization pressure only needs to be selected appropriately within a range of 0.1 to 10 MPa, preferably within a range of 0.2 to 8 MPa. Within this range, the pressure may be low (0.1 to 1 MPa) or high (1 to 10 MPa).

Examples of a stirring means include an anchor blade, a turbine blade, and a tilt blade. However, stirring with a large blade called a Fullzone or a Maxblend is preferable from the viewpoint of excellent diffusion of a monomer and excellent dispersion stability of a polymer. A stirring apparatus may be a horizontal stirring apparatus or a vertical stirring apparatus.

In step (I) of the present invention, the aqueous dispersion can be obtained even with a higher concentration of the fluorine-containing polymer in the polymerization product liquid. For example, when the compound of formula (1) is used singly, a stable aqueous dispersion of the fluorine-containing polymer can be obtained even at the concentration of the fluorine-containing polymer of about 45% by mass. However, when a fluorine-containing surfactant, particularly a fluorine-containing anionic surfactant having 6 or less carbon atoms is used together, an aqueous dispersion of the fluorine-containing polymer at a high concentration of more than 45% by mass, for example, at 45 to 55% by mass can be obtained in a stable state.

The fluorine-containing polymer (A) particle obtained in step (I) has a number-average particle diameter of about 100 to 200 nm, a number-average molecular weight of about 1.0 × 10⁴ to 1.0 × 10⁶, and a sharp molecular weight distribution (Mw/Mn) of about 2 to 5. The number of particles in the aqueous dispersion is from 1 × 10¹⁴ to 1 × 10¹⁵ count/g (water).

### Step (II)

In step (II), in the aqueous dispersion of the fluorine-containing polymer (A) particle obtained in step (I) itself, or in an aqueous dispersion obtained by adjusting the number of particles by diluting the aqueous dispersion of the fluorine-containing polymer (A) particle obtained in step (I) with water, an ethylenically unsaturated monomer is subjected to seed polymerization with the fluorine-containing polymer (A) particle.

Seed polymerization performed in step (II) is a conventionally known polymerization method (for example, JP 8-67795 A), and is a method in which an ethylenically unsaturated monomer is added to an aqueous dispersion of a polymer particle and the ethylenically unsaturated monomer is subjected to aqueous dispersion polymerization using the polymer particle (seed particle) as a nucleus.

Examples of the aqueous dispersion polymerization include emulsion polymerization and suspension polymerization like in step (I). Emulsion polymerization is particularly suitable from the viewpoint of making the polymer particles uniform easily. As conditions of seed polymerization or the like in step (II) of the present invention, conventionally known conditions can be employed.

Emulsion polymerization proceeds sufficiently and stably even with single use of the compound (1). However, the compound (1) may be used in combination with another surfactant. As the other surfactant used, the compound and the amount thereof exemplified in step (I) can be employed in step (II).

For example, the amount of the compound (1) used in step (II) is preferably from 10 to 5000 ppm, and more preferably from 20 to 4000 ppm with respect to the total amount of water in emulsion polymerization. The amount of the compound (1) of less than 10 ppm tends to reduce surface activity and to make it difficult to obtain a stable aqueous dispersion.

The ethylenically unsaturated monomer subjected to seed polymerization in step (II) only needs to be a monomer having a radically polymerizable ethylenically unsaturated bond. However, preferable examples thereof include an ester of acrylic acid or methacrylic acid, an unsaturated carboxylic acid, a hydroxyl group-containing alkyl vinyl ether, a carboxylic acid vinyl ester, and an α-olefin.

Specifically, as an ester of acrylic acid or methacrylic acid, an alkyl ester having 1 to 10 carbon atoms is exemplified from the viewpoint of excellent compatibility with the fluorine-containing polymer (A). Examples thereof include one or more kinds of an ester of (meth)acrylic acid such as methyl acrylate, ethyl acrylate, n-propyl acrylate, isopropyl acrylate, n-butyl acrylate, methyl methacrylate, n-propyl methacrylate, ethyl methacrylate, n-butyl methacrylate, isopropyl methacrylate, 2-ethylhexyl acrylate, 2-ethylhexyl methacrylate, cyclohexyl acrylate, or cyclohexyl methacrylate.

Specific examples of the unsaturated carboxylic acid include acrylic acid, methacrylic acid, vinyl acetic acid, crotonic acid, cinnamic acid, 3-allyloxy propionic acid, 3-(2-allyloxy ethoxycarbonyl) propionic acid, itaconic acid, itaconic acid monoester, maleic acid, maleic acid monoester, maleic anhydride, fumaric acid, fumaric acid monoester, vinyl phthalate, vinyl pyromellitate, and undecylenic acid. Among these examples, vinyl acetic acid, crotonic acid, itaconic acid, maleic acid, maleic acid monoester, fumaric acid, fumaric acid monoester, 3-allyloxy propionic acid, and undecylenic acid having a low homopolymerization property are preferable from viewpoints of difficulty in forming a homopolymer due to the low homopolymerization property and easy control in introduction of a carboxyl group.

Specific examples of the hydroxyl group-containing alkyl vinyl ether include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. Among these examples, 4-hydroxybutyl vinyl ether and 2-hydroxyethyl vinyl ether are preferable from the viewpoint of excellent polymerization reactivity.

Specific examples of the carboxylic acid vinyl ester include vinyl acetate, vinyl propionate, vinyl butyrate, vinyl isobutyrate, vinyl pivalate, vinyl caproate, vinyl versatate, vinyl laurate, vinyl stearate, vinyl cyclohexyl carboxylate, vinyl benzoate, and p-t-butyl vinyl benzoate, which can impart a characteristic such as improvement of gloss or rise in glass transition temperature to a coating film.

Examples of the α-olefin include ethylene, propylene, n-butene, and isobutene, which can impart a characteristic such as improvement of flexibility to a coating film.

The content of the ethylenically unsaturated monomer subjected to seed polymerization is preferably from 5 to 400 parts by mass, and more preferably from 10 to 150 parts by mass with respect to 100 parts by mass of the fluorine-containing polymer (A) particle (solid content).

The fluorine-containing seed polymer (B) particle obtained in steps (I)and (II) has an average particle diameter of about 110 to 300 nm, a number-average molecular weight of about 1.0 × 10⁴ to 1.0 × 10⁶, and a sharp molecular weight distribution (Mw/Mn) of about 1.5 to 4.0. The number of particles in the aqueous dispersion is from 1 × 10¹² to 1 × 10¹⁵ count/g (water).

The first fluorocarbon resin can be applied to various applications as it is or by modifying the first fluorocarbon resin appropriately.

For the first fluorocarbon resin, a conventionally known additive or blending ratio can be employed in addition to use of the fluorine-containing seed polymer (B) particle as a film-forming material of an aqueous coating composition. For example, the concentration of the fluorine-containing seed polymer (B) particle only needs to be selected from a range of about 10 to 60% by mass.

When the first fluorocarbon resin is prepared as an aqueous coating composition with a pigment, it is only necessary to stir and mix a predetermined amount of a pigment dispersion obtained by dispersing water, a pigment such as titanium oxide, a defoamer, a pigment dispersant, a pH-adjusting agent, or the like in an aqueous dispersion of the fluorine-containing seed polymer (B) particle in advance using a pigment dispersing machine such as a sand mill, and a predetermined amount of a film-forming auxiliary agent, then to add a predetermined amount of a thickener thereto and mix therewith, and to add another necessary additive appropriately. When an aqueous coating composition without a pigment is prepared, it is only necessary to add water, a film-forming auxiliary agent, a defoamer, a thickener, a pH-adjusting agent, and another necessary additive to an aqueous dispersion of the fluorine-containing seed polymer (B) particle, if necessary, and to stir and mix the resulting mixture by a known method.

As the additive of the first fluorocarbon resin, a film-forming auxiliary agent, an antifreezing agent, a pigment, a filler, a pigment dispersant, a defoamer, a leveling agent, a rheology-adjusting agent, a preservative, an ultraviolet absorber, an antioxidant, a matting agent, a lubricant, a vulcanizing agent, or the like can be added, if necessary.

Hereinafter, characteristics of the first fluorocarbon resin will be described, and an apparatus and measurement conditions used for evaluating the characteristics are as follows.

### (1) Average particle diameter

measurement apparatus: microtrac UPA manufactured by HONEYWELL Inc.
measurement method: dynamic light-scattering method

A sample is obtained by diluting an emulsion to be measured with pure water to a measurable concentration, and is measured at room temperature. The number-average diameter of the obtained data is used as a particle diameter.

### (2) Number of particles

Calculation method: Using the average particle diameter determined in (1) and a solid content, calculation is performed while a specific gravity of a polymer is assumed to be 1.8.

### (3) NMR analysis

NMR measurement apparatus: manufactured by Varian Medical Systems, Inc.
measurement conditions of ¹H-NMR: 400 MHz (tetramethylsilane = 0 ppm)
measurement conditions of ¹⁹F-NMR: 376 MHz (trichlorofluoromethane = 0 ppm)

### (4) Molecular weight analysis

Using Shodex GPC-104 manufactured by Showa Denko K.K., a weight-average molecular weight and a number-average molecular weight in terms of standard polystyrene are determined.

Measurement conditions are as follows.
Carrier: tetrahydrofuran
Flow rate: 0.6 ml/min
Column temperature: 40°C
Sample: 3% THF solution of a resin to be measured

### (5) Melt flow rate (MFR) value

Using a Dynisco melt index tester manufactured by Yasuda Seiki Seisakusho Co., Ltd., about 6 g of resin is put into an ID cylinder of 0.376 inches the temperature of which is maintained at 250°C ± 0.5°C. After the resin is allowed to stand for five minutes and the temperature reaches an equilibrium state, the resin is extruded through an orifice having a diameter of 0.0825 inches and a length of 0.315 inches under a piston load of 10 kg, and an average value of three values collected in the same period of time is used. A unit thereof is g/10 min.

### (6) Foaming property

A test coated plate is dried at 23°C for one day. Thereafter, two of the test coated plates are immersed in 1 kg of water at 23°C for three days. 50 g of the water used for immersion is weighed into a glass bottle of 100 ml, the glass bottle is shaken up and down by hand 50 times, and a height of a foam from a liquid surface is measured immediately thereafter and 30 minutes thereafter.

### (7) Test for warm water resistance

A test coated plate is dried at 23°C for seven days, is then immersed in water at 60°C for seven days according to JIS K5600-6-2, and is then dried at 23°C for one day. Grades for swelling (JIS K5600- 8-2), cracking (JIS K5600-8-4), and peeling (JIS K5600-8-5) are evaluated.

### Evaluation standard for grade of swelling (JIS K5600-8-2)

A density is divided into grades of 0 to 5 (0 is the smallest). A size is divided into grades of S1 to S5 (S1 is the smallest). For example, a grade is described as 2(S1).

### Evaluation standard for grade of cracking (JIS K5600-8-4)

A density is divided into grades of 0 to 5 (0 is the smallest). A size is divided into grades of S0 to S5 (S0 is the smallest). A depth is divided into grades of a to c (a is the shallowest). For example, a grade is described as 2(S1)b.

### Evaluation standard for grade of peeling (JIS K5600-8-5)

A density is divided into grades of 0 to 5 (0 is the smallest). A size is divided into grades of S1 to S5 (S1 is the smallest). A depth is divided into grades of a and b (a is shallower). For example, a grade is described as 2(S1)a.

### (8) Test for resistance to freezing and thawing

A test coated plate is dried at 23°C for seven days, is then allowed to stand in the air at -20°C for two hours, and is then immersed in water at 10°C for two hours. After this cycle is repeated 100 times, the test coating plate is dried at 23°C for one day. Grades for swelling (JIS K5600-8-2), cracking (JIS K5600-8-4), and peeling (JIS K5600-8-5) are evaluated in a similar manner to the test for warm water resistance.

### (9) Test for low-temperature film-forming property

A test plate is dried at 5 ± 1°C for four hours according to JIS 5663 7.7.3, is then immersed in water at 5 ± 2°C for 16 hours, and is then dried at 5 ± 1°C for three hours. Grades for swelling (JIS K5600-8-2), cracking (JIS K5600-8-4), and peeling (JIS K5600-8-5) are evaluated.

### (10) Gloss (60° specular gloss)

Surface gloss of a test coated plate is measured according to JIS K5600-4-7 using a variable angle gloss meter (Nippon Denshoku Industries Co., Ltd.), VGS (trade name)).

### Reference Example (manufacturing aqueous dispersion of fluorine-containing seed polymer (B-1) particle)

### Step (I)

Into a 2 L stainless steel autoclave, 500 g of ion-exchange water, 2.2 g of a 50% by mass ammonium perfluorohexanoate (C6) aqueous solution (concentration of ammonium perfluorohexanoate 2200 ppm/water as a polymerization solvent, the same hereinafter), and 0.789 g of a 38% by mass aqueous solution of a compound (2-1) represented by formula (2-1): 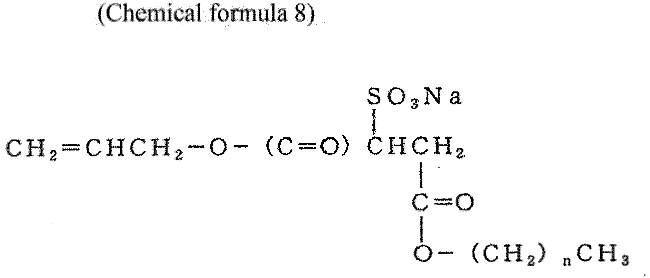 (in the formula, n is 11 or 12) (concentration of compound (2-1) 600 ppm/water) were put. An inside of the system was sufficiently replaced with nitrogen gas, and a pressure thereof was then reduced. Subsequently, a VdF/TFE/CTFE (= 72.2/16.0/11.8% by mol) monomer mixture was pressed into a polymerization tank such that a pressure in the system was from 0.75 to 0.8 MPa, and the temperature was raised to 70°C.

Subsequently, a polymerization initiator solution obtained by dissolving 1.00 g of ammonium persulfate (APS) in 4 ml of ion-exchange water and 0.75 g of ethyl acetate were pressed into the polymerization tank with nitrogen gas, and a reaction was started while the inside of the polymerization tank was stirred at 600 rpm.

When an internal pressure started to drop with the progression of polymerization, a VdF/TFE/CTFE monomer mixture (= 72.2/16.0/11.8% by mol) was supplied such that the internal pressure was maintained at 0.75 to 0.8 MPa. An unreacted monomer was released 7 hours and 30 minutes after the start of polymerization. The autoclave was cooled to obtain an aqueous dispersion of a fluorine-containing polymer having a solid concentration of 46.1 % by mass.

A copolymerization composition was examined by NMR analysis, and the composition was VdF/TFE/CTFE = 72.1/14.9/13 (% by mol). An average particle diameter of the resulting fluorine-containing polymer was 112.4 nm. The number of particles in the aqueous dispersion was 5.0 × 10¹⁴ (count/g (water)).

Coagulation was performed by freezing 200 g of the aqueous dispersion at - 10°C for 24 hours. The resulting coagulated product was washed with water and dried to obtain a fluorine-containing polymer (A-1).

MFR of the fluorine-containing polymer (A-1) was 4.96 g/10 min. A number-average molecular weight (Mn) of the fluorine-containing polymer (A-1) and a weight average molecular weight (Mw) thereof measured by GPC were 9.12 × 10⁴ and 4.03 × 10⁵, respectively. A molecular weight distribution Mw/Mn was 4.42.

### Step (II)

43.94 g(12900 ppm/water) of the compound represented by formula (2-1) was added to 2409.3 g of an aqueous dispersion (solid concentration 46.2% by mass) of the fluorine-containing polymer (A-1) particle obtained in step (I), and mixing was performed sufficiently to prepare an aqueous dispersion.

Subsequently, 467.5 g of methyl methacrylate (MMA), 4.8 g of butyl acrylate (BA), 4.8 g of acrylic acid (Ac), 2.4 g of mercaptan, and 159.0 g of water were put into a flask having a volume of 0.5 L. Mixing was performed sufficiently with an emulsifying machine to prepare a preliminary emulsified solution.

The total amount of the preliminary emulsified solution was gradually added to the above aqueous dispersion of the fluorine-containing polymer, and mixing was performed sufficiently. Thereafter, 15.9 g (12300 ppm/water) of polyethylene glycol monomethyl ether methacrylate (RMA-450 (trade name) manufactured by Nippon Emulsifier Co., Ltd.) as a surfactant and 95.4 g (36800 ppm/water) of a 50% methacryloyloxy polyoxyalkylene sodium sulfate (RS-3000 (trade name) manufactured by Sanyo Chemical Industries Co., Ltd.) aqueous solution were further added thereto, and mixing was performed sufficiently. An internal temperature was raised to 75°C. Polymerization was caused to proceed while 75.15 g of ammonium persulfate (APS) (1 % by mass aqueous solution) was added in four parts every 40 minutes. The reaction solution was cooled to room temperature two hours after the start of polymerization, and the reaction was terminated to obtain an aqueous dispersion of a fluorine-containing seed polymer (B-1) (obtained amount 3046.7 g, solid concentration 51.7% by mass). An average particle diameter of the resulting seed polymer was 159.4 nm.

### Reference Example 2 (manufacturing aqueous dispersion of fluorine-containing seed polymer (B-2) particle)

### Step (I)

Into a 2 L stainless steel autoclave, 500 g of ion-exchange water and 0.789 g of a 38% by mass aqueous solution of a compound (2-1) represented by formula (2-1): 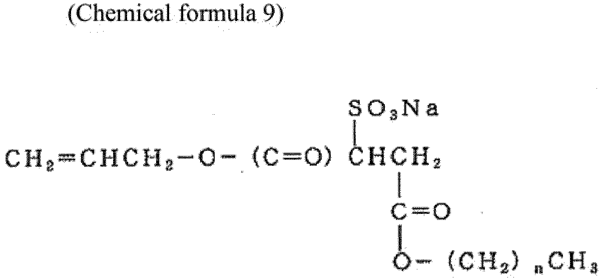 (in the formula, n is 11 or 12) (concentration of compound (2-1) 600 ppm/water) were put.

An inside of the system was sufficiently replaced with nitrogen gas, and a pressure thereof was then reduced. Subsequently, a VdF/TFE/CTFE (= 72.2/16.0/11.8% by mol) monomer mixture was pressed into a polymerization tank such that a pressure in the system was from 0.75 to 0.8 MPa, and the temperature was raised to 70°C.

Subsequently, a polymerization initiator solution obtained by dissolving 1.00 g of ammonium persulfate (APS) in 4 ml of ion-exchange water and 0.75 g of ethyl acetate were pressed into the polymerization tank with nitrogen gas, and a reaction was started while the inside of the polymerization tank was stirred at 600 rpm.

When an internal pressure started to drop with the progression of polymerization, a VdF/TFE/CTFE monomer mixture (= 72.2/16.0/11.8% by mol) was supplied such that the internal pressure was maintained at 0.75 to 0.8 MPa. An unreacted monomer was released 7 hours and 30 minutes after the start of polymerization. The autoclave was cooled to obtain an aqueous dispersion of a fluorine-containing polymer having a solid concentration of 46.1% by mass.

A copolymerization composition was examined by NMR analysis, and the composition was VdF/TFE/CTFE = 70.2/12.8/17.0 (% by mol). An average particle diameter of the resulting fluorine-containing polymer was 143 nm. The number of particles in the aqueous dispersion was 7.43×10¹⁴ (count/g (water)).

Coagulation was performed by freezing 200 g of the aqueous dispersion at - 10°C for 24 hours. The resulting coagulated product was washed with water and dried to obtain a fluorine-containing polymer (A-2).

MFR of the fluorine-containing polymer (A-2) was 6.51 g/10 min. A number-average molecular weight (Mn) of the fluorine-containing polymer (A-2) and a weight-average molecular weight (Mw) thereof measured by GPC were 2.36 × 10⁴ and 7.48 × 10⁴, respectively. A molecular weight distribution Mw/Mn was 3.18.

### Step (II)

43.94 g(12900 ppm/water) of a compound represented by formula (2-1) was added to 2409.3 g of an aqueous dispersion (solid concentration 46.2% by mass) of the fluorine-containing polymer (A-2) particle obtained in step (I), and mixing was performed sufficiently to prepare an aqueous dispersion.

Subsequently, 467.5 g of methyl methacrylate (MMA), 4.8 g of butyl acrylate (BA), 4.8 g of acrylic acid (Ac), 2.4 g of mercaptan, and 159.0 g of water were put into a flask having a volume of 0.5 L. Mixing was performed sufficiently with an emulsifying machine to prepare a preliminary emulsified solution.

The total amount of the preliminary emulsified solution was gradually added to the above aqueous dispersion of the fluorine-containing polymer, and mixing was performed sufficiently. Thereafter, 15.9 g (12300 ppm/water) of polyethylene glycol monomethyl ether methacrylate (RMA-450 (trade name) manufactured by Nippon Emulsifier Co., Ltd.) as a surfactant and 95.4 g (36800 ppm/water) of a 50% methacryloyloxy polyoxyalkylene sodium sulfate (RS-3000 (trade name) manufactured by Sanyo Chemical Industries Co., Ltd.) aqueous solution were further added thereto, and mixing was performed sufficiently. An internal temperature was raised to 75°C. Polymerization was caused to proceed while 75.15 g of ammonium persulfate (APS) (1% by mass aqueous solution) was added in four parts every 40 minutes. The reaction solution was cooled to room temperature two hours after start of polymerization, and the reaction was terminated to obtain an aqueous dispersion of a fluorine-containing seed polymer (B-2) (obtained amount 3078.8 g, solid concentration 51.0% by mass). An average particle diameter of the resulting seed polymer was 166.6 nm.

### Reference Example 3 (manufacturing aqueous dispersion of fluorine-containing seed polymer (B-3) particle)

### Step (I)

Into a 2 L stainless steel autoclave, 500 g of ion-exchange water, 0.5 g of a 50% ammonium perfluorooctanoate (C8) aqueous solution (concentration of ammonium perfluorooctanoate 1000 ppm/water), and 0.75 g (150 ppm/water) of polyethylene glycol monostearate (MYS-40 (trade name) manufactured by Nikko Chemicals Co., Ltd.) were put. An inside of the system was sufficiently replaced with nitrogen gas, and a pressure thereof was then reduced. Subsequently, a VdF/TFE/CTFE (= 74/14/12% by mol) monomer mixture was pressed into a polymerization tank such that a pressure in the system was from 1.00 to 1.10 MPa, and the temperature was raised to 60°C.

Subsequently, a polymerization initiator solution obtained by dissolving 0.20 g (400 ppm/water) of ammonium persulfate (APS) in 4 ml of ion-exchange water was pressed into the polymerization tank with nitrogen gas, and a reaction was started while the inside of the polymerization tank was stirred at 600 rpm.

When an internal pressure started to drop with the progression of polymerization, a VdF/TFE/CTFE monomer mixture (= 74/14/12% by mol) was supplied such that the internal pressure was maintained at 1.00 to 1.00 MPa. When three hours passed, 0.20 g (400 ppm/water) of APS was pressed into the polymerization tank with nitrogen gas. An unreacted monomer was released eight hours after the start of polymerization. The autoclave was cooled to obtain an aqueous dispersion of a fluorine-containing polymer having a solid concentration of 25.5% by mass.

A copolymerization composition was examined by NMR analysis, and the composition was VdF/TFE/CTFE = 78.5/11.4/10.1 (% by mol). An average particle diameter of the resulting fluorine-containing polymer was 115 nm. The number of particles in the aqueous dispersion was 2.23×10¹⁴ (count/g (water)).

Coagulation was performed by freezing 200 g of the aqueous dispersion at - 10°C for 24 hours. The resulting coagulated product was washed with water and dried to obtain a fluorine-containing polymer (A-3).

MFR of the fluorine-containing polymer (A-3) was 5.15 g/10 min. The fluorine-containing polymer (A-3) was not dissolved in THF, and therefore a molecular weight thereof could not be measured using GPC.

### Step (II)

43.94 g (12900 ppm/water) of a compound represented by formula (2-1) was added to 2409.3 g of an aqueous dispersion (solid concentration 46.2% by mass) of the fluorine-containing polymer (A-3) particle obtained in step (I), and mixing was performed sufficiently to prepare an aqueous dispersion.

Subsequently, 467.5 g of methyl methacrylate (MMA), 4.8 g of butyl acrylate (BA), 4.8 g of acrylic acid (Ac), 2.4 g of mercaptan, and 159.0 g of water were put into a glass separable flask having a volume of 0.5 L. Mixing was performed sufficiently with an emulsifying machine to prepare a preliminary emulsified solution.

The total amount of the preliminary emulsified solution was gradually added to the above aqueous dispersion of the fluorine-containing polymer, and mixing was performed sufficiently. Thereafter, 15.9 g (12300 ppm/water) of polyethylene glycol monomethyl ether methacrylate (RMA-450 (trade name) manufactured by Nippon Emulsifier Co., Ltd.) as a surfactant and 95.4 g (36800 ppm/water) of a 50% methacryloyloxy polyoxyalkylene sodium sulfate (RS-3000 (trade name) manufactured by Sanyo Chemical Industries Co., Ltd.) aqueous solution were further added thereto, and mixing was performed sufficiently. An internal temperature was raised to 75°C. Polymerization was caused to proceed while 75.15 g of ammonium persulfate (APS) (1% by mass aqueous solution) was added in four parts every 40 minutes. The reaction solution was cooled to room temperature two hours after the start of polymerization, and the reaction was terminated to obtain an aqueous dispersion of a fluorine-containing seed polymer (B-3) (obtained amount 3014.7 g, solid concentration 51.5% by mass). An average particle diameter of the resulting seed polymer was 169.5 nm.

### Reference Examples 4 to 6

Using each of the aqueous dispersions of the fluorine-containing seed polymers (B) manufactured in Reference Example 1 to 3 as it was, a weather-resistant aqueous coating composition for building (white coating composition) was prepared with the following formulation.

The resulting white coating composition was applied on a slate plate (obtained by applying a base coating (DK7151 (trade name) manufactured by Nichigo-Mowinyl Co., Ltd.) on the slate plate in advance so as to have a dry film thickness of 150 g/m² and drying the resulting product at room temperature for one day) with a brush so as to have a film thickness of 150 g/m², and was dried at room temperature for one day to manufacture a test coated plate.

Resistance to freezing and thawing, warm water resistance, a low-temperature film-forming property, a foaming property, and gloss (60°) of the test coated plate were examined. Table 1 indicates results thereof.

### (Formulation of white coating composition)

Aqueous dispersion of fluorine-containing seed polymer (B): 65.00 parts by mass
Water: 9.12 parts by mass
Titanium oxide: 31.39 parts by mass
Pigment dispersant: 2.35 parts by mass
Antifreezing agent: 1.79 parts by mass
pH-adjusting agent: 0.04 parts by mass
Defoamer: 0,11 parts by mass
Thickener 1: 0.38 parts by mass
Thickener 2: 0.40 parts by mass
Film-forming auxiliary agent: 2.35 parts by mass

Components used are as follows.
Titanium oxide: Tipaque CR-97 (trade name) manufactured by Ishihara Sangyo Co., Ltd.
Pigment dispersant: Nopcosperse SN-5027 (trade name) manufactured by San Nopco Limited
Antifreezing agent: ethylene glycol
pH-adjusting agent: ammonia water
Defoamer: FS Antifoam 013A (trade name) manufactured by Dow Coming Corporation
Thickener 1: Adekanol UH-420 (trade name) manufactured by Adeka Corporation
Thickener 2: Primal ASE -60 (trade name) manufactured by Rohm & Hearts Japan Co., Ltd.
Film-forming auxiliary agent: diethyl adipate

**Table**

| Table 1 shows Reference Examples 1-6, therein called "Examples 1-6". | | | |
|---|---|---|---|
| | Example 1 | Example 2 | Example 3 |
| Step (I) | | | |
| Fluorine-containing polymer (A) (% by mol) | A-1 | A-2 | A-3 |
| VdF | 72.1 | 70.2 | 78.5 |
| TFE | 14.9 | 12.8 | 11.4 |
| CTFE | 13.0 | 17.0 | 10.1 |
| Surfactant (ppm/water) | | | |
| Compound (2-1) | 600 | 600 | - |
| C6 | 2200 | - | - |
| C8 | - | - | 1000 |
| MYS-40 | - | - | 150 |

| Step (II) | | | |
|---|---|---|---|
| Monomer for seed polymerization (% by mass) | | | |
| MMA | 98 | 98 | 98 |
| BA | 1 | 1 | 1 |
| Ac | 1 | 1 | 1 |
| Surfactant (ppm/water) | | | |
| Compound (2-1) | 12900 | 12900 | 12900 |
| RMA-450M | 12300 | 12300 | 12300 |
| RS-3000 | 36800 | 36800 | 36800 |

| | Example 4 | Example 5 | Example 6 |
|---|---|---|---|
| Coating film characteristics | | | |
| Resistance to freezing and thawing | | | |
| Swelling | 0 | 0 | 0 |
| Cracking | 0 | 0 | 0 |
| Peeling | 0 | 0 | 0 |
| Warm water resistance | | | |
| Swelling | 0 | 0 | 1(S2) |
| Cracking | 0 | 0 | 0 |
| Peeling | 0 | 0 | 2(S1)a |
| Low-temperature film-forming property | | | |
| Swelling | 0 | 1(S1) | 0 |
| Cracking | 0 | 0 | 0 |
| Peeling | 0 | 0 | 0 |
| Foaming property (mm) | | | |
| Immediately after shaking | 2 | 2 | 8 |
| After 30 minutes | 0 | 0 | 3 |
| Gloss | 64 | 59 | 54 |

"0" in resistance to freezing and thawing, warm water resistance, and a low-temperature film-forming property in Table 1 indicates that there was no swelling, cracking, or peeling at all.

Here, the second fluorocarbon resin is SIFCLEAR (JSR Corporation, trademark) in which a vinylidene fluoride polymer and an acrylic polymer are compatible with each other at a molecular level, and butyl cellosolve is added thereto.

First, the second fluorocarbon resin in the present invention is formed of an aqueous dispersion characterized by containing a composite polymer particle (1) obtained by mixing and emulsifying the following component (A), a radically polymerizable monomer (B), an emulsifier (C), and a hydrolysis catalyst for the component (A) (D) in an aqueous medium to cause a hydrolysis-condensation reaction of the component (A) to proceed, then fining the emulsion, then adding a radical polymerization initiator (E) thereto to cause a reaction, and causing a polymerization reaction of the component (B) to proceed, and a composite polymer particle of a fluorine-containing polymer and a (meth)acrylic polymer (II), and optionally a copolymer particle of a radically polymerizable fluorine-containing monomer and a (meth)acrylic monomer.
(A): At least one selected from the group consisting of organosilane represented by the following general formula (3-1), a hydrolyzate of the organosilane, and a partial condensate of the hydrolyzate.
(Chemical formula 10)

(R¹)ₙ-Si-(OR²)₄₋ₙ (3-1)

(in the formula, R¹ is a monovalent organic group having 1 to 8 carbon atoms, two R¹s may be the same as or different from each other, R² is a linear or branched alkyl group having 1 to 5 carbon atoms or an acyl group having 1 to 6 carbon atoms, two R²s may be the same as or different from each other, and n is an integer of 0 to 2).

The component (1) is formed of a composite polymer particle obtained by mixing and emulsifying the following component (A), a radically polymerizable monomer (B), an emulsifier (C), and a hydrolysis catalyst for the component (A) (D) to cause a hydrolysis-condensation reaction of the component (A) to proceed, then fining the emulsion, then adding a radical polymerization initiator (E) thereto to cause a reaction, and causing a polymerization reaction of the component (B) to proceed (hereinafter, referred to as composite polymer particle (I)). Hereinafter, components used for manufacturing the composite polymer particle (I) and a method for manufacturing the composite polymer particle (I) will be described.

### -Component (A)-

The component (A) used in the present invention is formed of at least one selected from the group consisting of organosilane represented by the above general formula (1) (hereinafter, referred to as organosilane (1)), a hydrolyzate of the organosilane (1), and a condensate of the hydrolyzate.

In general formula (3-1), examples of the monovalent organic group having 1 to 8 carbon atoms in R¹ include a phenyl group; a linear, branched, or cyclic alkyl group such as a methyl group, an ethyl group, a n-propyl group, an i-propyl group, a n-butyl group, an i-butyl group, a sec-butyl group, a t-butyl group, a n-hexyl group, a n-heptyl group, a n-octyl group, a 2-ethylhexyl group, a cyclopentyl group, or a cyclohexyl group; an acyl group such as an acetyl group, a propionyl group, a butyryl group, a valeryl group, a benzoyl group, a trioyl group, or a caproyl group; an alkenyl group such as a vinyl group or an allyl group, a substituted derivative thereof, an epoxy group, a glycidyl group, a (meth)acryloyloxy group, a ureido group, an amide group, a fluoro acetamide group, and an isocyanate group.

Examples of a substituent in the substituted derivative of R¹ include a halogen atom, a substituted or unsubstituted amino group, a hydroxyl group, a mercapto group, an isocyanate group, a glycidoxy group, a 3,4-epoxycyclohexyl group, a (meth)acryloyloxy group, a ureido group, and an ammonium base. However, the total number of carbon atoms in R¹ formed of these substituted derivatives is 8 or less including the carbon atoms in the substituent.

Examples of the linear or branched alkyl group having 1 to 5 carbon atoms in R² include a methyl group, an ethyl group, a n-propyl group, an i-propyl, a n-butyl group, a sec-butyl group, a t-butyl group, and a n-pentyl group. Examples of the acyl group having 1 to 6 carbon atoms include an acetyl group, a propionyl group, a butyryl group, a valeryl group, and a caproyl group.

Specific examples of the organosilane (1) include a tetraalkoxysilane such as tetramethoxysilane, tetraethoxysilane, tetra-n-propoxysilane, tetra-i-propoxysilane, or tetra-n-butoxysilane; a trialkoxysilane such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysiiane, n-hexyltrimethoxysilane, n-heptyltrimethoxysilane, n-octyltrimethoxysilane, vinyltrimethoxysilane, vinyltriethoxysilane, cyclohexyltrimethoxysilane, cyciohexyltriethoxysilane, phenyltrimethoxysilane, phenyltriethoxysilane, 3-chloropropyltrimethoxysilane, 3-chloropropyltriethoxysilane, 3,3,3-trifiuoropropyltrimethoxysilane, 3,3,3-trifluoropropyltriethoxysilane, 3-aminopropyltrimethoxysilane, 3-aminopropyltrietboxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-isocyanatepropyltrimethoxysilane, 3-isocyanatepropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloyloxypropyltrimethoxysilane, 3-(meth)acryloyloxypropyltriethoxysilane, 3-ureidopropyltrimethoxysilane, or 3-ureidopropyltriethoxysilane;
a dialkoxysilane such as dimethyldimethoxysilane, dimethyldiethoxysilane, diethyldimethoxysilane, diethyldiethoxysilane, di-n-propyldimethoxysilane, di-n-propyldiethoxysilane, di-i-propyldimethoxysilane, di-i-propyldiethoxysilane, di-n-butyldimethoxysilane, di-n-butyldiethoxysilane, di-n-pentyldimethoxysilane, di-n-pentyldiethoxysilane, di-ti-hexyldimethoxysilane, di-n-hexyldiethoxysilane, di-n-heptyldimethoxysilane, di-n-heptyldiethoxysilane, di-n-octyldimethoxysilane, di-n-octyldiethoxysilane, di-n-cyclohexyidimethoxysilane, di-n-cyclohexyldiethoxysilane, diphenyldimethoxysilane, diphenyldiethoxysilane, 3-glycidoxypropyldimethoxymethylsilane, or 3-glycidoxypropyldiethoxymethylsilane; methyltriacetyloxysilane, and dimethyldiacetyloxysilane.

Among these examples of the organosilane (1), a trialkoxysilane and a dialkoxysilane are preferable. As the trialkoxysilane, methyltrimethoxysilane and methyltriethoxysilane are preferable. As the dialkoxysilane, dimethyldimethoxysilane and dimethyldiethoxysilane are preferable.

The organosilane (1) can be used singly or in a mixture of two or more kinds thereof.

The hydrolyzate of the organosilane (1) in the component (A) is a product having a silanol (Si-OH) group formed by hydrolysis of a Si-OR² group in the organosilane (1). However, it is not necessary that all the OR² groups in the organosilane (1) have been hydrolyzed, but the product may have only one OR² group or two or more OR² groups hydrolyzed, or may be a mixture thereof, for example.

The partial condensate of the hydrolyzate of the organosilane (1) in the component (A) (hereinafter, simply referred to as "partial condensate") is a product having a siloxane (Si-O-Si) bond formed by condensation of a silanol group in the hydrolyzate. However, in the present invention, it is not necessary that all the groups have been condensed, but the partial condensate is a concept also including a product having only a part of the groups condensed and a mixture of products having different condensation degrees.

As the component (A) in the present embodiment, the component (A) is preferably used in a state in which the organosilane (1) and the partial condensate are mixed. By co-condensing the organosilane (1) and the partial condensate, a coating film having various excellent characteristics can be formed from a final aqueous dispersion. In addition, polymerization stability is improved when a radically polymerizable monomer is polymerized by adding the component (E) described below, and polymerization can be performed easily even in a state of a high solid content. Therefore, there is also an advantage in terms of industrialization.

When the organosilane (1) and the partial condensate are used together, a dialkoxysilane is preferably used, and dimethyldimethoxysilane, dimethyldiethoxysilane, or the like is particularly preferably used as the organosilane (1). By using a dialkoxysilane, a linear portion is added to an organopolysiloxane molecular chain, and flexibility of a resulting composite polymer particle is increased. Furthermore, when a coating film is formed using a resulting aqueous dispersion, a coating film having excellent transparency can be obtained.

In addition, when the organosilane (1) and the partial condensate are used together, the partial condensate is preferably a product obtained from only a trialkoxysilane or a product obtained from combination of 40 to 95% by mol of a trialkoxysilane and 60 to 5% by mol of a dialkoxysilane. By using a trialkoxysilane and a dialkoxysilane at this ratio, a resulting coating film becomes flexible and can improve weather resistance.

When the organosilane (1) and the partial condensate are used together, it is preferable to prepare and use the partial condensate of the organosilane (1) by hydrolyzing and condensing the organosilane (1) in advance. When the partial condensate is prepared, it is preferable to hydrolyze and condense the organosilane (1) by adding a proper amount of water and by further adding an organic solvent if necessary to the organosilane (1).

In this case, the amount of water used is usually from 1.2 to 3.0 mol, and preferably from 1.3 to 2.0 mol with respect to 1 mol of the organosilane (1).

The organic solvent used if necessary is not particularly limited as long as it can be mixed with a resulting partial condensate or the component (B) described below. However, examples thereof include an alcohol, an aromatic hydrocarbon, an ether, a ketone, and an ester.

Among these organic solvents, specific examples of the alcohol include methanol, ethanol, n-propyl alcohol, i-propyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol mono-n-butyl ether, ethylene glycol monoethyl ether acetate, diethylene glycol monoethyl ether, propylene glycol monomethyl ether, propylene monomethyl ether acetate, and diacetone alcohol.

Specific examples of the aromatic hydrocarbon include benzene, toluene, and xylene. Specific examples of the ether include tetrahydrofuran and dioxane. Specific examples of the ketone include acetone, methyl ethyl ketone, methyl isobutyl ketone, and diisobutyl ketone. Specific examples of the ester include ethyl acetate, n-propyl acetate, n-butyl, and propylene carbonate.

These organic solvents can be used singly or in a mixture of two or more kinds thereof.

When the partial condensate contains an organic solvent, the organic solvent can be removed prior to a condensation-polymerization reaction described below.

A weight-average molecular weight (hereinafter, referred to as "Mw") of the partial condensate in terms of polystyrene is usually from 800 to 100,000, and preferably from 1,000 to 50,000. Examples of a commercially available product of the partial condensate include MKC silicate manufactured by Mitsubishi Chemical Corporation, ethyl silicate manufactured by Colcoat Co. Ltd., silicon resin manufactured by Dow Corning Toray Co., Ltd., silicon resin manufactured by Toshiba Silicone Co., Ltd., silicon resin manufactured by Shin-Etsu Chemical industry Co., Ltd., hydroxyl group-containing polydimethylsiloxane manufactured by Dow Coming Asia Co., Ltd., and silicon oligomer manufactured by Nippon Unicar Co., Ltd. These products may be used as they are, or may be used by further condensing these products.

When the organosilane (1) and the partial condensate are used together as the component (A), as a mixing ratio thereof, a ratio of the organosilane (1) is from 95 to 5% by weight (in terms of a complete hydrolysis condensate), and preferably from 90 to 10% by weight, and a ratio of the partial condensate is from 5 to 95% by weight (in terms of a complete hydrolysis condensate), and preferably from 10 to 90% by weight [the total of the ratio of the organosilane (1) and the ratio of the partial condensate is 1 00% by weight]. When the ratio of the partial condensate is less than 5% by weight, tackiness may be caused on a surface of a resulting coating film, or curability of the coating film may be lowered. One the other hand, when the ratio is more than 95% by weight, the ratio of the organosilane (1) component is less, it may be difficult to emulsify a mixture containing the component (A), polymerization stability of the component (B) or stability of an emulsion during polymerization may be lowered, or a film-forming property of a resulting aqueous dispersion may be lowered.

Here, the "complete hydrolysis condensate" means a product obtained by hydrolyzing 100% of the Si-OR² groups in the organosilane (1) to obtain silanol groups and further condensing the silanol groups completely to form siloxane bonds.

### -Radically polymerizable monomer (B)-

The radically polymerizable monomer used for the second fluorocarbon resin in the present embodiment is not limited as long as it can be radically polymerized.

Examples of the radically polymerizable monomer include a (meth)acrylate such as methyl (meth)acrylate, ethyl (meth)acrylate, n-propyl (meth)acrylate, i-propyl (meth)acrylate, n-butyl (meth)acrylate, i-butyl (meth)acrylate, sec-butyl (meth)acrylate, t-butyl (meth)acrylate, n-amyl (meth)acrylate, i-amyl (meth)acrylate, n-hexyl (meth)acrylate, n-octyl (meth)acrylate, 2-ethylhexyl (meth)acrylate, n-decyl (meth)acrylate, n-dodecyl (meth)acrylate, lauryl (meth)acrylate, cyclohexyl (meth)acrylate, p-t-butyl cyclohexyl (meth)acrylate, phenyl (meth)acrylate, or benzyl (meth)acrylate;
a hydroxyl group-containing (meth)acrylate such as 2-hydroxyethyl (meth)acrylate, 2-hydroxypropyl (meth)acrylate, 3-hydroxypropyl (meth)acrylate, polyethylene glycol mono(meth)acrylate, polypropylene glycol mono(meth)acrylate, mono( mcth)acrylate of an ethylene oxide/propylene oxide random copolymer, mono(meth)acrylate of an ethylene oxide/propylene oxide block copolymer, glycerol mono(meth)acrylate, or glycerol di(meth)acrylate;
an amino group-containing (meth)acrylate such as 2-aminoethyl (meth)acrylate, 2-dimethylaminoethyl (meth)acrylate, 2-aminopropyl (meth)acrylate, 2-dimethylaminopropyl (meth)acrylate, 3-aminopropyl (meth)acrylate, or 3-dimethyl aminopropyl (meth)acrylate;
an epoxy group-containing unsaturated compound such as glycidyl (meth)acrylate, 2-(3,4-epoxycyclohexyl) ethyl (meth)acrylate, or allyl glycidyl ether;
a fluorine-containing (meth)acrylate such as trifluoroethyl (meth)acrylate or pentadecafluoro-n-octyl (meth)acrylate;
a polyfunctional (meth)acrylate such as ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, tripropylene glycol di(meth)acrylate, tetrapropylene glycol di(meth)acrylate, 1,4-butanediol di(meth)acrylate, 1,6-hexanediol di(meth)acrylate, glycerol tri(meth)acrylate, trimethylolpropane tri(meth)acrylate, pentaerythritol tetra(meth)acrylate, polyethylene glycol di(meth)acrylate, polypropylene glycol di(meth)acrylate, di(meth)acrylate of an ethylene oxide/propylene oxide random copolymer, or di(meth)acrylate of an ethylene oxide/propylene oxide block copolymer;
an unsaturated carboxylic acid such as (meth)acrylic acid, crotonic acid, maleic acid, fumaric acid, or itaconic acid;
an unsaturated carboxylic anhydride such as maleic anhydride or itaconic anhydride;
an aromatic vinyl compound such as styrene, α-methyl styrene, 2-methyl styrene, 3-methyl styrene, 4-methyl styrene, 3,4-dimethyl styrene, 4-ethyl styrene, 3,4-diethyl styrene, 4-t-butyl styrene, 4-methoxy styrene, 4-ethoxy styrene, 4-hydroxymethyl styrene, 2-chlorostyrene, 3-chlorostyrene, 4-chloro-3-methyl styrene, 2,4-dichlorostyrene, 2,6-dichlorostyrene, 1-vinylnaphthalene, or divinylbenzene;
an unsaturated amide compound such as (meth)acrylamide, N-methyl (meth)acrylamide, N,N-dimethyl(meth)acrylamide, N-methylol(meth)acrylamide, N-methoxymethyl(meth)acrylamide, N-n-butoxymethyl(meth)acrylamide, N,N'-methylene bis(meth)acrylamide, or maleic acid amide;
an unsaturated imide compound such as maleimide, N-cyclohexyl maleimide, or N-phenylmaleimide;
a vinyl cyanide compound such as (meth)acrylonitrile or α-chloro acrylonitrile; an amine imide group-containing vinyl compound such as 1,1,1-trimethylamine (meth)acrylimide, 1-methyl-1-ethylamine(meth)acrylimide, 1,1-dimethyl-1-(2-hydroxypropyl)amine(meth)acrylimide, 1,1-dimethyl-1-(2-phenyl-2-hydroxyethyl) amine (meth)acrylimide, or 1,1-dimethyl-1-(2-hydroxy-2-phenoxypropyl) amine (meth)acrylimide;
an unsaturated ether compound such as ethyl vinyl ether, 2-hydroxyethyl vinyl ether, 2-aminoethyl vinyl ether, or allyl glycidyl ether; an aldo group-containing unsaturated compound such as (meth)acrolein, crotonaldehyde, formylstyrene, formyl-α-methyl styrene, (meth)acrylamide pivalic aldehyde, 3-(meth)acrylamido methyl-anisaldehyde, or β-(meth)acryloxy-α,α-dialkyl propanal represented by the following general formula (3-2) 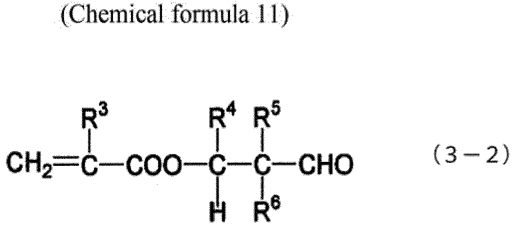 (in the formula, R³ is a hydrogen atom or a methyl group, R⁴ is a hydrogen atom or an alkyl group having 1 to 3 carbon atoms, R⁵ is an alkyl group having 1 to 3 carbon atoms, and R⁶ is an alkyl group having 1 to 4 carbon atoms);
a keto group-containing unsaturated compound such as diacetone (meth)acrylamide, a vinyl alkyl ketone having 4 to 7 carbon atoms (for example, vinyl methyl ketone, vinyl ethyl ketone, vinyl-n-propyl ketone, vinyl-i-propyl ketone, vinyl-n-butyl ketone, vinyl-i-butyl ketone, or vinyl-t-butyl ketone), vinyl phenyl ketone, vinyl benzyl ketone, divinyl ketone, diacetone(meth)acrylate, acetonitrile(meth)acrylate, 2-hydroxypropyl (meth)acrylate-acetyl acetate, 3-hydroxypropyl(meth)acrylate-acetyl acetate, 2-hydroxybutyl(meth)acrylate-acetyl acetate, 3 hydroxybutyl(meth)acrylate-acetyl acetate, 4-hydroxybutyl(meth)acrylate-acetyl acetate, or butanediol-1,4 (meth)acrylate-acetyl acetate;
a conjugated diene such as 1,3-butadiene, isoprene, or chloroprene; and
a radically polymerizable monomer having a group capable of forming a siloxane bond, such as dicaprolactone,
CH₂=CHSi(CH₃)(OCH₃)₂, CH₂=CHSi(OCH₃)₃, CH₂=CHSi(CH₃)Cl₂, CH₂=CHSiCl₃, CH₂=CHCOO(CH₂)₂Si(CH₃)(OCH₃)₂, CH₂=CHCOO(CH₂)₂Si(OCH₃)₃, CH₂=CHCOO(CH₂)₃Si(CH₃)(OCH₃)₂, CH₂=CHCOO(CH₂)₃Si(OCH₃)₃, CH₂=CHCOO(CH₂)₂Si(CH₃)Cl₂, CH₂=CHCOO(CH₂)₂SiCl₃, CH₂=CHCOO(CH₂)₃Si(CH₃)Cl₂, CH₂=CHCOO(CH₂)₃SiCl₃, CH₂=C(CH₃)COO(CH₂)₂Si(CH₃)(OCH₃)₂,CH₂=C(CH₃)COO(CH₂)₂Si(OCH₃)₃, CH₂=C(CH₃)COO(CH₂)₃Si(CH₃)(OCH₃)₂, CH₂=C(CH₃)COO(CH₂)₃Si(OCH₃)₃, CH₂=C(CH₃)COO(CH₂)₂Si(CH₃)Cl₂, CH₂=C(CH₃)COO(CH₂)₂SiCl₃, CH₂=C(CH₃)COO(CH₂)₃Si(CH₃)Cl₂, or CH₂=C(CH₃)COO(CH₂)₃SiCl₃.

Specific examples of the β-(meth)acryloxy-α,α-dialkyl propanal include β-(meth)acryloxy-α,α-dimethyl propanal [that is, β-(meth)acryloxy pivalic aldehyde], β-(meth)acryloxy-α,α-diethyl propanal, β-(meth)acryloxy-α,α-dipropyl propanal, β-(meth)acryloxy-α methyl-α-butyl propanal, and β-(meth)acryloxy-α,α,β-trimethyl propanal.

As the radically polymerizable monomer, a (meth)acrylic compound is preferable, and a (meth)acrylate, a hydroxyl group-containing (meth)acrylate, (meth)acrylic acid, an unsaturated amide, and a keto group-containing unsaturated compound are more preferable. Particularly preferable examples thereof include methyl methacrylate, n-butyl (meth)acrylate, 2-ethylhexyl (meth)acrylate, cyclohexyl (meth)acrylate, 2-hydroxyethyl (meth)acrylate, polyethylene glycol mono(meth)acrylate, glycidyl (meth)acrylate, (meth)acrylic acid, (meth)acrylamide, N,N-dimethyl (meth)acrylamide, and diacetone (meth)acrylamide.

As a use ratio between the component (A) and the component (B) in an aqueous dispersion, a ratio of the component (A) is usually from 1 to 99 parts by weight (in terms of a complete hydrolysis condensate), and preferably from 5 to 95 parts by weight, and a ratio of the component (B) is usually from 99 to 1 part by weight, and preferably from 95 to 5 parts by weight [(A) + (B) = 100 parts by weight]. When the use ratio of the component (B) is less than 1 part by weight, a film-forming property or crack resistance tends to be lowered. On the other hand, when the use ratio of the component (B) is more than 99 parts by weight, weather resistance tends to be lowered.

### -Emulsifier (C)-

Examples of the emulsifier include an anionic surfactant, a nonionic surfactant, a cationic surfactant, an amphoteric surfactant, and a water-soluble polymer.

Examples of the anionic surfactant include a reactive anionic surfactant such as an alkali metal salt of higher alcohol sulfate, an alkali metal salt of alkylbenzene sulfonic acid, an alkali metal salt of succinic acid dialkyl ester sulfonic acid, an alkali metal salt of alkyl diphenyl ether disulfonic acid, a sulfate of polyoxyethylene alkyl ether, a sulfate of polyoxyethylene alkyl phenyl ether, a phosphate of polyoxyethylene alkyl ether, a phosphate of polyoxyethylene alkyl phenyl ether, LATEMUL S-180A (trade name, manufactured by Kao Corporation), ELEMINOL JS-2 (trade name, manufactured by Sanyo Kasei Co.), Aqualon HS-10 (trade name, manufactured by Dai-ichi Kogyo Seiyaku Co.), or Adeka Reasoap SE-10N (trade name, manufactured by Adeka Corporation).

Examples of the nonionic surfactant include a reactive nonionic surfactant such as polyoxyethylene alkyl ether, polyoxyethylene alkyl phenyl ether, Aqualon RS-20 (trade name, manufactured by Dai-ichi Kogyo Seiyaku Co.), or Adeka Reasoap NE-20 (trade name, manufactured by Adeka Corporation).

Examples of the cationic surfactant include a reactive cationic surfactant such as an alkyl pyridinyl chloride, an alkyl amine acetate, an alkyl ammonium chloride, or a diallyl ammonium halide described in JP-60-235631 A.

Suitable examples of the amphoteric surfactant include an amino acid-type carboxylic acid-type amphoteric surfactant, a betaine acid-type carboxylic acid-type amphoteric surfactant, and a sulfonic acid-type amphoteric surfactant.

As the water-soluble polymer, a known alkali-soluble polymer can be used, for example.

These surfactants can be used singly or in a mixture of two or more kinds thereof.

The amount of the emulsifier used is usually from 0.1 to 10 parts by weight, and preferably from 0.2 to 5 parts by weight with respect to the total 100 parts by weight of the component (A) (in terms of a complete hydrolysis condensate) and the component (B). When the amount of the emulsifier used is less than 0.1 parts by weight, there is a tendency that it is difficult to emulsify reaction components sufficiently or that stability of an emulsion is lowered during hydrolysis and condensation and during radical polymerization. On the other hand, when the amount of the emulsifier used is more than 10 parts by weight, workability may be deteriorated due to increase in foaming.

### -Hydrolysis catalyst (D)-

In the second fluorocarbon resin in the present embodiment, by using a hydrolysis catalyst for the component (A) (hereinafter, simply referred to as "hydrolysis catalyst"), a condensation reaction of the component (A) is promoted, the molecular weight of a resulting organopolysiloxane is increased, and a coating film having excellent strength, long-term durability, or the like can be formed from a resulting aqueous dispersion.

Examples of the hydrolysis catalyst include an acidic compound, an alkaline compound, a salt compound, an amine compound, and an organic metal compound and/or a partial hydrolyzate thereof (hereinafter, an organic metal compound and/or a partial hydrolyzate thereof are/is collectively referred to as "organic metal compound or the like"). Examples of the acidic compound include acetic acid, hydrochloric acid, sulfuric acid, phosphoric acid, alkyl titanic acid, dodecylbenzenesulfonic acid, p-toluenesulfonic acid, phthalic acid, and (meth)acrylic acid which is also the component (B). Among these acidic compounds, acetic acid, dodecylbenzenesulfonic acid, and (meth)acrylic acid are preferable.

When a radically polymerizable unsaturated carboxylic acid such as (meth)acrylic acid is used as the hydrolysis catalyst, the radically polymerizable unsaturated carboxylic acid is polymerized as the component (B). Therefore, weather resistance of a resulting coating film or water resistance thereof is not deteriorated advantageously. In such a case, the content of the radically polymerizable unsaturated carboxylic acid in the component (B) is usually 5% by weight or less, and preferably about from 0.1 to 3% by weight.

Examples of the alkaline compound include sodium hydroxide and potassium hydroxide. Among these alkaline compounds, sodium hydroxide is preferable. Examples of the salt compound include an alkali metal salt of naphthenic acid, octylic acid, nitrous acid, sulfurous acid, aluminic acid, or carbonic acid.

Examples of the amine compound include ethylenediamine, tetramethylenediamine, hexamethylenediamine, diethylenetriamine, triethylenetetramine, tetraethylenepentamine, piperidine, piperazine, m-phenylenediamine, p-phenylenediamine, ethanolamine, triethylamine, 3-aminopropyl trimethoxysilane, 3-aminopropyl triethoxysilane, 3-(2-aminoethyl)-aminopropyl trimethoxysilane, 3-(2-aminoethyl)-aminopropyl triethoxysilane, 3-(2-aminoethyl)-aminopropyl methyl dimethoxysilane, 3-anilinopropyl trimethoxysilane, an alkylamine salt, a quaternary ammonium salt, and various modified amines used as a curing agent for an epoxy resin. Among these amine compounds, 3-aminopropyl-trimethoxysilane, 3-aminopropyltriethoxysilane, 3-(2-aminoethyl)-aminopropyl-trimethoxysilane are preferable.

Examples of the organic metal compound include an organic zirconium compound such as tetra-n-butoxy zirconium, tri-n-butoxy-ethylacetoacetate zirconium, din-butoxy-bis(ethyl acetoacetate) zirconium, n-butoxy-tris(ethyl acetoacetate) zirconium, tetrakis(n-propyl acetoacetate) zirconium, tetrakis(acetyl acetoacetate) zirconium, or tetrakis(ethyl acetoacetate) zirconium;
an organic titanium compound such as tetra-i-propoxy titanium, di-i-propoxy-bis(ethyl acetoacetate) titanium, di-i-propoxy-bis(acetylacetate) titanium, or di-i-propoxy-bis(acetylacetone) titanium;
an organic aluminum compound such as tri-i-propoxy aluminum, di-i-propoxy-ethylacetoacetate aluminum, di-i-propoxy-acetylacetonate aluminum, i-propoxy-bis(ethylacetoacetate) aluminum, i-propoxy-bis(acetylacetonate) aluminum, tris(ethylacetoacetate) aluminum, tris(acetylacetonate) aluminum, or monoacetylacetonate-bis(ethylacetoacetate) aluminum, partial hydrolyzates of these organic metal compounds, a carboxylic acid-type organic tin compound such as
(C₄H₉)₂Sn(OCOC₁₁H₂₃)₂, (C₄H₉)₂Sn(OCOCH=CHCOOCH₃)₂, (C₄H₉)₂Sn(OCOCH=CHCOOC₄H₉)₂, (C₈H₁₇)₂Sn(OCOC₈H₁₇)₂, (C₈H₁₇)₂Sn(OCOC₁₁N₂₃)₂, (C₈H₁₇)₂Sn(OCOCH=CHCOOCH₃)₂, (C₈H₁₇)₂Sn(OCOCH=CHCOOC₄H₉)₂, (C₈H₁₇)₂Sn(OCOCH=CHCOOC₈H₁₇)₂, (C₈H₁₇)₂Sn(OCOCH=CHCOOC)₁₆H₃₃)₂, (C₈H₁₇)₂Sn(OCOCH=CHCOOC₁₇H₃₅)₂, (C₈H₁₇)₂Sn(OCOCH=CHCOOC₁₈H₃₇)₂, (C₈H₁₇)₂Sn(OCOCH=CHCOOC₂₀H₄₁)₂, 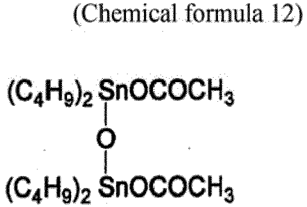 (C₄H₉)Sn(OCOC₁₁H₂₃)₃, or (C₄H₉)Sn(OCONa)₃; a mercaptide-type organic tin compound such as (C₄H₉)₂Sn(SCH₂COOC₈H₁₇)₂, (C₄H₉))₂Sn(SCH₂CH₂COOC₈H₁₇)₂, (C₈H₁₇)₂Sn(SCH₂COOC₈H₁₇)₂, (C₈H₁₇)₂Sn(SCH₂CH₂COOC₈H₁₇)₂, (C₈H₁₇)₂Sn(SCH₂COOC₁₂H₂₅)₂, (C₈H₁₇)₂Sn(SCH₂CH₂COOC₁₂H₂₅)₂, (C₄H₉)Sn(SCOCH=CHCOOC₈H₁₇)₃, or (C₈H₁₇)Sn(SCOCH=CHCOOC₈H₁₇)₃; 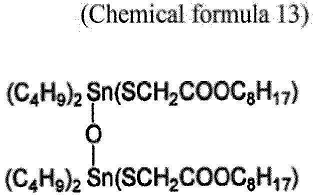 a sulfide-type organic tin compound such as (C₄H₉)₂Sn=S or (C₈H₁₇)₂Sn=S: 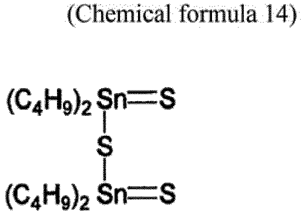 a chloride-type organic tin compound such as (C₄H₉)SnCl₃, (C₄H₉)₂SnCl₂, or (C₈H₁₇)₂SnCl₂; 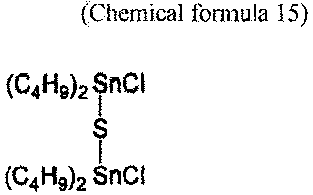 an organic tin oxide such as (C₄H₉)₂SnO or (C₈H₁₇)₂SnO, and a product obtained by a reaction between these organic tin oxides and an ester compound such as ethyl silicate, dimethyl maleate, diethyl maleate, or dioctyl phthalate.

Among these organic metal compounds, tri-n-butoxy-ethylacetoacetate zirconium, di-i-propoxy-bis(acetylacetonato) titanium, di-i-propoxy-ethylacetoacetate aluminum, tris(ethylacetoacetate) aluminum, and a partial hydrolyzate thereof are preferable.

The above hydrolysis catalysts can be used singly or in a mixture of two or more kinds thereof, and can be used in a mixture with a zinc compound or another reaction retarding agent.

The amount of the hydrolysis catalyst used is usually from 0.01 to 5 parts by weight, preferably from 0.1 to 5 parts by weight, and more preferably from 0.1 to 3 parts by weight with respect to the total 100 parts by weight of the component (A) (in terms of a complete hydrolysis condensate) and the component (B). When the amount of the hydrolysis catalyst used is less than 0.01 parts by weight, a hydrolysis-condensation reaction of the component (A) may be insufficient. When the amount used of the hydrolysis catalyst is more than 5 parts by weight, storage stability of an aqueous dispersion tends to be lowered, or cracking tends to occur easily in a coating film.

### -Radical polymerization initiator (E)-

Examples of the radical polymerization initiator used in the present embodiment include a water-soluble initiator such as a persulfate including potassium persulfate, sodium persulfate, and ammonium persulfate, hydrogen peroxide, t-butyl hydroperoxide oxide, t-butyl peroxy maleic acid, succinic acid peroxide, or 2,2'-azobis [2-N-benzylamidino] propane hydrochloride; an oil-soluble initiator such as benzoyl peroxide, cumene hydroperoxide, diisopropyl peroxy dicarbonate, cumylperoxy neodecanoate, cumylperoxy octoate, or azobisisobutyronitrile; and a redox initiator using a reducing agent such as acidic sodium sulfite, Rongalite, or ascorbic acid together.

The amount of the radical polymerization initiator used is usually from 0.01 to 5 parts by weight, and preferably from 0.05 to 4 parts by weight with respect to the total 100 parts by weight of the component (A) (in terms of a complete hydrolysis condensate) and the component (B). When the amount of the radical polymerization initiator used is less than 0.01 parts by weight, a polymerization reaction of the radically polymerizable monomer (B) may be inactivated in the middle. On the other hand, when the amount of the radical polymerization initiator used is more than 5 parts by weight, weather resistance of a coating film may be lowered.

### -Method for manufacturing composite polymer particle (I)-

The composite polymer particle (I) is manufactured by mixing and emulsifying the above components (A) to (D) in an aqueous medium to cause a hydrolysis-condensation reaction of the component (A) to proceed, then fining the emulsion, then adding the above component (E) thereto to cause a reaction, and causing a polymerization reaction of the component (B) to proceed. An aqueous dispersion in which the composite polymer particle (I) is dispersed in the aqueous medium is thereby obtained. In the stage for mixing and emulsifying the components to cause hydrolysis of the component (A) to proceed, a condensation reaction of a hydrolyzate may proceed.

In the method for manufacturing the composite polymer particle (1), polymerization of the component (B) after the emulsion is fined can be referred to as a kind of mini emulsion polymerization. The mini emulsion polymerization is emulsion polymerization in which the component (B) is finely emulsified and dispersed in an aqueous medium so as to have an average particle diameter usually of 0.5 µm or less, preferably of 0.3 µm or less, particularly preferably of 0.1 to 0.2 µm, and polymerization is performed with the dispersion state maintained. When the composite polymer particle (I) is manufactured, a treatment for fining the emulsion is performed after the hydrolysis-condensation reaction of the component (A) proceeds to some extent.

Water is a main component of the medium when the composite polymer particle (I) is manufactured. The use amount of water as the total amount of water added to the component (A) in advance and water added for mixing and emulsifying the components is usually from 50 to 2,000 parts by weight, and preferably from 100 to 1,000 parts by weight with respect to the total 100 parts by weight of the component (A) (in terms of a complete hydrolysis condensate) and the component (B). When the amount of water used is less than 50 parts by weight, emulsification may be difficult, or stability of the emulsion after emulsification may be lowered. On the other hand, when the amount of water used is more than 2,000 parts by weight, productivity is lowered. Therefore, the amount of less than 50 parts by weight or more than 2,000 parts by weight is not preferable.

When the composite polymer particle (I) is manufactured, the components can be mixed and emulsified by a usual stirring means. For example, the components can be mixed and emulsified and the emulsion can be fined using a high-pressure homogenizer, a homomixer, an ultrasonic dispersing machine, or the like.

As conditions of the hydrolysis-condensation reaction of the component (A) and the polymerization reaction of the component (B), a reaction temperature is usually from 25 to 90°C, and preferably from 40 to 80°C, and reaction time is usually from 0.5 to 15 hours, and preferably from one to eight hours.

In the process of the hydrolysis-condensation reaction and the polymerization reaction, the hydrolysis-condensation reaction of the organosilane (1) in the component (A) proceeds in advance, and the polymerization reaction of the component (B) proceeds after the emulsion is fined and the component (E) is added. In a condensation reaction when the component (A) contains the organosilane (1) and the partial condensate, in addition to a condensation reaction of the hydrolyzate of the organosilane (1) alone or the partial condensate alone, a co-condensation reaction between the hydrolyzate of the organosilane (1) and the partial condensate may proceed simultaneously.

By the hydrolysis-condensation reaction and the polymerization reaction, an interpenetrating polymer network structure (IPN) in which an organopolysiloxane component derived from the component (A) and a vinyl polymer component derived from the component (B) interpenetrate each other is formed in a resulting composite polymer particle. When the component (B) contains a radically polymerizable monomer having a group capable of forming a siloxane bond, the organopolysiloxane component derived from the component (A) and the vinyl polymer component derived from the component (B) may be chemically bonded to each other. In addition, chain transfer of a reactive radical may occur during polymerization of the component (B), and a vinyl polymer component may be grafted to the organopolysiloxane chain to form a chemical bond. Furthermore, the hydrolysis-condensation reaction and the polymerization reaction do not substantially include a low boiling point organic solvent having a boiling point of less than 100°C or an aromatic organic solvent such as toluene. Therefore, an excellent working environment is ensured.

In the hydrolysis-condensation reaction and the polymerization reaction, when the component (A) or the component (B) has an acidic group such as a carboxyl group or a carboxylic anhydride group, it is preferable to adjust the pH by adding a basic compound after the hydrolysis-condensation reaction and the polymerization reaction. When the component (A) or the component (B) has a basic group such as an amino group or an amine imide group, it is preferable to adjust the pH by adding an acidic compound after the hydrolysis-condensation reaction and the polymerization reaction. When the component (A) or the component (B) has both an acidic group and a basic group and a ratio of either one thereof is larger, it is preferable to adjust the pH by adding a basic compound or an acidic compound after the hydrolysis-condensation reaction and the polymerization reaction according to the ratios of the groups. This can increase hydrophilicity of a resulting composite polymer particle to improve dispersibility.

Examples of the basic compound used for adjusting the pH include an amine such as ammonia, methylamine, dimethylamine, trimethylamine, ethylamine, diethylamine, triethylamine, ethanolamine, diethanolamine, or dimethylaminoethanol; and an alkali metal hydroxide such as caustic potash or caustic soda. Examples of the acidic compound include an inorganic acid such as hydrochloric acid, phosphoric acid, sulfuric acid, or nitric acid; formic acid, acetic acid, propionic acid, lactic acid, oxalic acid, citric acid, adipic acid, (meth)acrylic acid, maleic acid, fumaric acid, and itaconic acid.

After the pH is adjusted, the pH of the aqueous dispersion is usually from 6 to 10, and preferably from 7 to 8.

An average particle diameter of the composite polymer particle (I) is preferably from 0.01 to 0.5 µm, and more preferably from 0.05 to 0.3 µm.

In this way, an aqueous dispersion in which the composite polymer particle (I) is dispersed in an aqueous medium is obtained. However, this aqueous dispersion is preferably used as it is or after a concentration thereof is adjusted for preparation of a final aqueous dispersion.

A solid concentration of the aqueous dispersion of the composite polymer particle (I) is usually from 10 to 60% by weight, and preferably from 20 to 50% by weight. This solid concentration is usually adjusted by the amount of water.

A medium in the aqueous dispersion of the composite polymer particle (I) essentially contains water, but may contain an organic solvent such as an alcohol to an extent of several % by weight in some cases.

When the aqueous dispersion of the composite polymer particle (I) contains the organic solvent used for preparing the component (A), the aqueous dispersion can be used after this organic solvent is removed therefrom.

In addition, an organic solvent such as the organic solvent used for preparing the component (A) can be added to the aqueous dispersion of the composite polymer particle (I), if necessary.

### -Component (II)-

The component (II) in the second fluorocarbon resin in the present embodiment is formed of a composite polymer particle of a fluorine-containing polymer and a (meth)acrylic polymer, and optionally of a copolymer particle of a radically polymerizable fluorine-containing monomer and a (meth)acrylic monomer.

Hereinafter, the copolymer particle of a radically polymerizable fluorine-containing monomer and a (meth)acrylic monomer will be referred to as "polymer particle (i)", the composite polymer particle of a fluorine-containing polymer and a (meth)acrylic polymer will be referred to as "polymer particle (ii)", and the polymer particle (i) and the polymer particle (ii) will be referred to as "polymer particle (II)" collectively.

The fluorine-containing polymer in the polymer particle (ii) is formed of a homopolymer of a radically polymerizable fluorine-containing monomer or a copolymer thereof.

Examples of a radically polymerizable fluorine-containing monomer used for the copolymer of a radically polymerizable fluorine-containing monomer and a (meth)acrylic monomer in the polymer particle (i) or the fluorine-containing polymer in the polymer particle (ii) include a fluoroolefin such as vinyl fluoride, vinylidene fluoride, tetrafluoroethylene, trifluorochloroethylene, hexafluoropropylene, or hexafluoroisobutylene, an alkyl ester of (per)fluoro (meth)acrylic acid or (per)fluoro (meth)acrylic acid, and a fluorine-containing (meth)acrylate exemplified for the radically polymerizable monomer (B) in the composite polymer particle (I).

Among these radically polymerizable fluorine-containing monomers, a fluoroolefin is preferable, vinylidene fluoride, tetrafluoroethylenelene, hexafluoropropylene, and the like are more preferable, and vinylidene fluoride is particularly preferable.

The radically polymerizable fluorine-containing monomers can be used singly or in a mixture of two or more kinds thereof.

The (meth)acrylic monomer used for the copolymer of a radically polymerizable fluorine-containing monomer and a (meth)acrylic monomer in the polymer particle (i) or the (meth)acrylic polymer in the polymer particle (ii) is radically polymerizable. Examples thereof include a (meth)acrylate, a hydroxyl group-containing (meth)acrylate, an amino group-containing (meth)acrylate, a polyfunctional (meth)acrylate, a (meth)acrylamide in an unsaturated amide or a compound similar to a derivative thereof, and (meth)acrylic acid, exemplified for the radically polymerizable monomer (B) in the composite polymer particle (I).

Among these (meth)acrylic monomers, an alkyl acrylate having 4 to 12 carbon atoms in the alkyl group, an alkyl methacrylate having 1 to 6 carbon atoms in the alkyl group, (meth)acrylic acid, and the like are preferable. n-butyl acrylate, i-butyl acrylate, 2-ethylhexyl acrylate, methyl methacrylate, 2-ethylhexyl methacrylate, cyclohexyl methacrylate, (meth) acrylic acid, and the like are particularly preferable.

The (meth)acrylic monomers can be used singly or in a mixture of two or more kinds thereof.

In addition, the copolymer of a radically polymerizable fluorine-containing monomer and a (meth)acrylic monomer in the polymer particle (i) and the fluorine-containing polymer and the (meth)acrylic polymer in the polymer particle (ii) can contain a radically polymerizable monomer other than the compounds described above (hereinafter, referred to as "other radically polymerizable monomer"). Examples of the other radically polymerizable monomer include compounds other than the (meth)acrylic monomers exemplified for the polymer particle (i) and the polymer particle (ii) of the compounds exemplified for the radically polymerizable monomer (B) in the composite polymer particle (I).

Among these other radically polymerizable monomers, an aldo group-containing unsaturated compound, a keto group-containing unsaturated compound, and the like are preferable, and acrolein, vinyl methyl ketone, diacetone (meth)acrylamide, and the like are particularly preferable.

The other radically polymerizable monomers can be used singly or in a mixture of two or more kinds thereof.

As the polymer particle (II), at least the polymer particle (ii) is employed.

Examples of a structure of the polymer particle (ii) include a core-shell type in which a fluorine-containing polymer is used as a core and a (meth)acrylic polymer is used as a shell, a core-shell type in which a (meth)acrylic polymer is used as a core and a fluorine-containing polymer is used as a shell, and a homogeneous type in which a fluorine-containing polymer and a (meth)acrylic polymer are uniformly compatible with each other in a single particle. However, when importance is placed on weather resistance particularly, the homogeneous type is preferable.

The polymer particle (ii) can be easily determined to be a homogeneous type by indicating a single glass transition point in differential scanning calorimetry or forming an optically clear film when the polymer particle (ii) is formed into a film shape.

Preferable examples of the fluorine-containing polymer in the polymer particle (ii) include polyvinylidene fluoride and a copolymer of vinylidene fluoride and another fluoroolefin. More preferable examples thereof include a vinylidene fluoride/tetrafluoroethylene copolymer, a vinylidene fluoride/hexafluoropropylene copolymer, and a vinylidene fluoride/tetrafluoroethylene/hexafluoropropylene copolymer. Particularly preferable examples thereof include a vinylidene fluoride/hexafluoropropylene copolymer and a vinylidene fluoride/tetrafluoroethylene/hexafluoropropylene copolymer.

The fluorine-containing polymers can be used singly or in a mixture of two or more kinds thereof.

In the preferable copolymer of vinylidene fluoride and another fluoroolefin, the content of vinylidene fluoride is usually 50% by weight or more.

As the content of each monomer in the vinylidene fluoride/tetrafluoroethylene copolymer, the content of vinylidene fluoride is preferably from 50 to 90% by weight, and the content of tetrafluoroethylene is preferably from 50 to 10% by weight. As the content of each monomer in the vinylidene fluoride/hexafluoropropylene copolymer, the content of vinylidene fluoride is preferably from 50 to 90% by weight, and the content of hexafluoropropylene is preferably from 50 to 10% by weight. As the content of each monomer in the vinylidene fluoride/tetrafluoroethylene/hexafluoropropylene copolymer, the content of vinylidene fluoride is preferably from 50 to 80% by weight, the content of tetrafluoroethylene is preferably from 10 to 40% by weight, and the content of hexafluoropropylene is preferably from 5 to 40% by weight.

In the present invention, a weight average molecular weight of a fluorine-containing polymer is usually from 100,000 to 500,000.

The (meth)acrylic polymer is preferably a copolymer containing an alkyl acrylate having 4 to 12 carbon atoms in the alkyl group and/or an alkyl methacrylate having 1 to 6 carbon atoms in the alkyl group, and an aldo group-containing unsaturated compound and/or a keto group-containing unsaturated compound. The (meth)acrylic polymer is more preferably a copolymer of at least one selected from the group consisting of n-butyl acrylate, i-butyl acrylate, 2-ethylhexyl acrylate, methyl methacrylate, 2-ethylhexyl methacrylate, and cyclohexyl methacrylate, and at least one selected from the group consisting of acrolein, vinyl methyl ketone, and diacetone (meth)acrylamide, optionally further containing an unsaturated carboxylic acid.

These (meth)acrylic polymers can be used singly or in a mixture of two or more kinds thereof.

As the content of each monomer in the (meth)acrylic polymer, the content of an alkyl (meth)acrylate is preferably from 40 to 99.1% by weight, and more preferably from 50 to 80% by weight, the total content of an aldo group-containing unsaturated compound and a keto group-containing unsaturated compound is preferably from 0.1 to 20% by weight, and more preferably from 2 to 7% by weight, the content of an unsaturated carboxylic acid is preferably from 0 to 30% by weight, and more preferably from 1 to 15% by weight, and the content of a radically polymerizable monomer other than these monomers is preferably from 0 to 59.9% by weight, and more preferably from 0 to 30% by weight. In the (meth)acrylic polymer, particularly when the total content of an aldo group-containing unsaturated compound and a keto group-containing unsaturated compound is less than 0.1% by weight, even when crosslinking is performed with a hydrazine crosslinking agent described below, the number of crosslinking points is reduced, and warm water resistance or solvent resistance tends to be lowered. On the other hand, when the total content is more than 20% by weight, weather resistance or warm water resistance may be lowered.

When an alkyl acrylate and an alkyl methacrylate are used together in the (meth)acrylic polymer, 30 to 50% by weight of the alkyl acrylate is preferably used with respect to the total amount of the alkyl acrylate and the alkyl methacrylate.

When the (meth)acrylic polymer has an aldo group and/or a keto group, 50% by weight or more of the alkyl methacrylate is preferably used with respect to the total amount of the alkyl acrylate and the alkyl methacrylate in order to make the (meth)acrylic polymer uniformly compatible with a fluorine-containing polymer.

In the present invention, a weight average molecular weight of the (meth)acrylic polymer is usually from 50,000 to 100,000.

In order to manufacture the polymer particle (ii), 20 to 500 parts by weight of a radically polymerizable monomer to give a (meth)acrylic polymer, preferably 40 to 300 parts by weight thereof is subjected to emulsion polymerization in the presence of 100 parts by weight (in terms of a solid content) of fluorine-containing polymer particles dispersed in an aqueous medium. When the amount of the radically polymerizable monomer used is less than 20 parts by weight, processability (particularly, a film-forming property), adhesion to a substrate, or the like tends to be lowered. On the other hand, when the amount used is more than 500 parts by weight, weather resistance of a fluorine-containing polymer, chemical resistance thereof, or the like may be deteriorated.

A fluorine-containing polymer used for manufacturing the polymer particle (ii) can be manufactured by an appropriate method such as emulsion polymerization, solution polymerization, or precipitation polymerization. However, it is particularly preferable to manufacture the fluorine-containing polymer by emulsion polymerization because a resulting aqueous dispersion of the fluorine-containing polymer can be used as it is or after a concentration thereof is adjusted for emulsion polymerization of a radically polymerizable monomer to give a (meth)acrylic polymer.

When the fluorine-containing polymer is manufactured by a method other than emulsion polymerization, a method for dispersing the fluorine-containing polymer in an aqueous medium is not particularly limited. Examples thereof include a method for transferring a fluorine-containing polymer solution to an aqueous dispersion and a method for dispersing fluorine-containing polymer particles obtained by precipitation polymerization in an aqueous medium.

When the polymer particle (ii) is manufactured, an average particle diameter of a fluorine-containing polymer in an aqueous dispersion is preferably from 0.03 to 0.3 µm, and more preferably from 0.03 to 0.2 µm.

Emulsion polymerization of a radically polymerizable monomer in the presence of a fluorine-containing polymer particle can be considered to be a kind of seed polymerization. A reaction behavior thereof is not necessarily clear. However, it is considered that an added radically polymerizable monomer is absorbed or adsorbed mainly by a fluorine-containing polymer particle, and polymerization proceeds while the particle swells.

Reaction conditions for the emulsion polymerization are not particularly limited. For example, a reaction is performed in an aqueous medium in the presence of an emulsifier or a polymerization initiator at a temperature of about 30 to 100°C about for 1 to 30 hours. A chain transfer agent, a chelating agent, a pH-adjusting agent, a solvent, or the like may be added, if necessary.

Examples of the emulsifier include an anionic surfactant, a nonionic surfactant, and a combination of the anionic surfactant and the nonionic surfactant. An amphoteric surfactant or a cationic surfactant can be used in some cases.

Examples of the anionic surfactant include a higher alcohol sulfate sodium salt, sodium alkylbenzene sulfonate, dialkyl succinate sodium sulfonate, alkyl diphenyl ether sodium disulfonate, polyoxyethylene alkyl ether sodium sulfate, and polyoxyethylene alkyl phenyl ether sodium sulfate.

Among these anionic surfactants, sodium lauryl sulfate, sodium dodecylbenzene sulfonate, sodium polyoxyethylene alkyl ether sulfate, polyoxyethylene alkyl phenyl ether sodium sulfate, and the like are preferable.

Examples of the nonionic surfactant include polyoxyethylene alkyl ether, polyoxyethylene alkylaryl ether, polyoxyethylene fatty acid ester, and polyoxyethylene sorbitan fatty acid ester. Polyoxyethylene nonylphenyl ether, polyoxyethylene octylphenyl ether, or the like is usually used.

Examples of the amphoteric surfactant include lauryl betaine, a hydroxyethyl imidazoline sulfate sodium salt, and sodium imidazoline sulfonate.

Examples of the cationic surfactant include alkyl pyridinium chloride, alkyl trimethyl ammonium chloride, dialkyl dimethyl ammonium chloride, and alkyl dimethyl benzyl ammonium chloride.

As the emulsifier, a fluorine-containing surfactant such as perfluoroalkyl carboxylate, perfluoroalkyl sulfonate, perfluoroalkyl phosphate, perfluoroalkyl polyoxyethylene, or perfluoroalkyl betaine can be used.

In emulsion polymerization, a so-called reactive emulsifier polymerizable with a radically polymerizable monomer, such as styrene sodium sulfonate, allyl alkyl sodium sulfonate, polyoxyethylene alkyl allyl phenyl ether ammonium sulfate, or polyoxyethylene alkyl allyl phenyl ether can be used. Combined use of a 2-(1-allyl)-4-nonylphenoxy polyethylene glycol sulfate ammonium salt and 2-(1-allyl)4-nonylphenoxy polyethylene glycol is particularly preferable.

The amount of the emulsifier used is usually from 0.05 to 5 parts by weight with respect to the total 100 parts by weight of the fluorine-containing polymer particle and the radically polymerizable monomer.

Examples of the polymerization initiator include a water-soluble polymerization initiator such as potassium persulfate, ammonium persulfate, or hydrogen peroxide, and a redox polymerization initiator obtained by combining these water-soluble polymerization initiators with a reducing agent.

Examples of the reducing agent include sodium pyrosulfite, sodium bisulfite, sodium sulfite, sodium thiosulfate, L-ascorbic acid or a salt thereof, sodium formaldehyde sulfoxylate, ferrous sulfate, and glucose.

These reducing agents can be used singly or in a mixture of two or more kinds thereof.

An oil-soluble polymerization initiator can be used while being dissolved in a radically polymerizable monomer or a solvent.

Examples of the oil-soluble polymerization initiator include 2,2'-azobisisobutyronitrile, 2,2'-azobis(4-methoxy-2,4-dimethylvaleronitrile), 2,2'-azobis-2,4-dimethylvaleronitrile, 1,1'-azobiscyclohexane-1-carbonitrile, 2,2'-azobisisovaleronitrile, 2,2'-azobisisocapronitrile, 2,2'-azobis(phenyl isobutyronitrile), benzoyl peroxide, di-t-butyl peroxide, dilauroyl peroxide, cumene hydroperoxide, diisopropylbenzene hydroperoxide, p-menthane hydroperoxide, t-butyl hydroperoxide, 3,5,5-trimethyl hexanol peroxide, and t-butyl peroxy (2-ethylhexanoate).

Among these oil-soluble polymerization initiators, 2,2-azobisisobutyronitrile, benzoyl peroxide, cumene hydroperoxide, diisopropylbenzene hydroperoxide, p-menthane hydroperoxide, t-butyl hydroperoxide, 3,5,5-trimethyl hexanol peroxide, t-butyl peroxy (2-ethylhexanoate), and the like are preferable.

In the second fluorocarbon resin in the present embodiment, each of a water-soluble polymerization initiator and an oil-soluble polymerization initiator can be used singly or in a mixture of two or more kinds thereof, or the water-soluble polymerization initiator and the oil-soluble polymerization initiator can be used together.

The amount of the polymerization initiator used is usually from 0.1 to 3 parts by weight with respect to the total 100 parts by weight of the radically polymerizable monomer.

Examples of the chain transfer agent include a halogenated hydrocarbon such as carbon tetrachloride, chloroform, or bromoform; a mercaptan such as n-dodecyl mercaptan, t-dodecyl mercaptan, n-octyl mercaptan, or n-hexadecyl mercaptan; a xanthogen such as dimethyl xanthogen disulfide, diethyl xanthogen disulfide, or diisopropyl xanthogen disulfide; a terpene such as dipentene or terpinolene; and a thiuram sulfide such as tetramethyl thiuram monosulfide, tetraethyl thiuram disulfide, tetrabutyl thiuram disulfide, or dipentamethyl thiuram disulfide.

These chain transfer agents can be used singly or in a mixture of two or more kinds thereof.

The use amount of the chain transfer agent is usually from 0 to 10 parts by weight with respect to the total 100 parts by weight of the radically polymerizable monomer.

Examples of the chelating agent include glycine, alanine, and ethylenediamine tetraacetic acid. Examples of the pH-adjusting agent include sodium carbonate, potassium carbonate, sodium hydrogen carbonate, and ammonia.

Each of the chelating agent and the pH-adjusting agent can be used singly or in a mixture of two or more kinds thereof.

The use amounts of the chelating agent and the pH-adjusting agent are usually from 0 to 0.1 parts by weight and from 0 to 3 parts by weight, respectively, with respect to the total 100 parts by weight of the radically polymerizable monomer.

Examples of the solvent used when an oil-soluble polymerization initiator is used include methyl ethyl ketone, acetone, trichlorotrifluoroethane, methyl isobutyl ketone, dimethyl sulfoxide, toluene, dibutyl phthalate, methyl pyrrolidone, and ethyl acetate.

These solvents can be used singly or in a mixture of two or more kinds thereof.

The amount of the solvent used is preferably small within such a range not to impair workability, disaster prevention safety, environmental safety, and manufacturing safety, and is usually about from 0 to 20 parts by weight with respect to the total 100 parts by weight of the radically polymerizable monomer.

When emulsion polymerization is performed, the fluorine-containing polymer particle and the radically polymerizable monomer can be added by various methods.

Examples of the addition methods include a method 1) for adding the total amount of the radically polymerizable monomer to an aqueous dispersion of the fluorine-containing polymer particle at once, a method 2) for causing a reaction by adding a part of the radically polymerizable monomer to an aqueous dispersion of the fluorine-containing polymer particle and then adding the remaining radically polymerizable monomer continuously or in increments, a method 3) for adding the total amount of the radically polymerizable monomer to an aqueous dispersion of the fluorine-containing polymer particle continuously or in increments, and a method 4) for adding the fluorine-containing polymer particle continuously or in increments during emulsion polymerization of the radically polymerizable monomer in an aqueous medium.

Among these addition methods, particularly in the method 1) or 2), the amount of the radically polymerizable monomer initially added to the aqueous dispersion of the fluorine-containing polymer particle is preferably 50% by weight or more with respect to the total amount.

An average particle diameter of the polymer particle (ii) obtained by such emulsion polymerization of the radically polymerizable monomer in the presence of the fluorine-containing polymer particle is usually from 0.06 to 3 µm, preferably from 0.05 to 0.5 µm, and more preferably from 0.05 to 0.3 µm. When the average particle diameter is less than 0.04 µm, productivity tends to be lowered due to increase in viscosity of the aqueous dispersion and difficulty in making a solid content high, or a coagulated product tends to be generated easily when a large mechanical shearing force acts according to use conditions. On the other hand, when the average particle diameter is more than 3 µm, storage stability of the aqueous dispersion tends to be lowered slightly.

The average particle diameter of the polymer particle (ii) can be adjusted easily by selecting the size of the fluorine-containing polymer particle appropriately.

The polymer particle (i) can be also manufactured in a similar manner to the above method for manufacturing an aqueous dispersion of the polymer particle (ii).

A solid concentration of the aqueous dispersion of the polymer particle (II) is usually from 10 to 60% by weight, and preferably from 20 to 50% by weight. This solid concentration is usually adjusted by the amount of water.

A medium in the aqueous dispersion of the polymer particle (II) essentially contains water, but may contain an organic solvent such as an alcohol to an extent of several % by weight in some cases.

The aqueous dispersion of the second fluorocarbon resin in the present embodiment contains the composite polymer particle (I) and the polymer particle (II).

A ratio between the composite polymer particle (I) and the polymer particle (II) in the aqueous dispersion in the present embodiment is usually from 90/10 to 10/90, preferably from 80/20 to 20/80, more preferably from 70/30 to 30/70, and particularly preferably from 60/40 to 40/60.

A total concentration of the composite polymer particle (I) and the polymer particle (II) in the aqueous dispersion of the second fluorocarbon resin in the present embodiment is usually from 10 to 60% by weight, and preferably from 30 to 50% by weight.

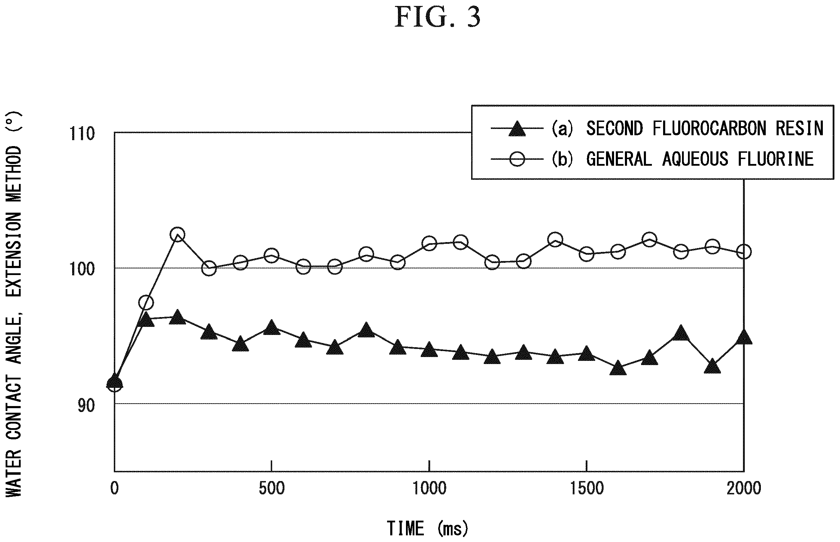

Characteristics of the second fluorocarbon resin in the present embodiment are as follows. That is, when a water contact angle on a coating film formed using the second fluorocarbon resin as a coating agent is measured by a water dynamic contact angle (extension method) in which water is further added at a constant flow rate to a droplet formed in advance, the droplet is expanded, and change in the contact angle is measured with time, as illustrated in FIG. 3, the water contact angle when the droplet is expanded is increased to 100° or more in (b), but the water contact angle is 95° or less, having a small change width in (a). This corresponds to a fact that a film surface of the second fluorocarbon resin in the present embodiment (a) is easily wet by water, the water is extended easily, and the surface is easily washed, for example, under a condition in which water falls on the surface continuously like falling rain.

Table 2 indicates general physical properties of the second fluorocarbon resin in the present embodiment.

**Table 2**

| | | |
|---|---|---|
| Emulsion physical properties | Solid content (TSC) [%] | 47 |
| | Viscosity [mPa·s] | 200 |
| | Particle diameter [nm] | 150 |
| | pH | 8.0 |
| Use conditions | Drying method | Normal drying |
| | Minimum film-forming temperature (MFT) [°C] | <10 |
| Water resistance | 60°C warm water × 3 days Presence of whitening or swelling (Substrate: black steel plate with epoxy resin layer) | Not observed |
| Acid resistance | Impregnated with 5% sulfuric acid × 24 hours Presence of whitening, swelling, or crack (Substrate: glass) | Not observed |
| Alkali resistance | Impregnated with 5% NaOH aqueous solution × 24 hours Presence of whitening, swelling, or crack (Substrate: slate plate) | Not observed |

As the additive of the second fluorocarbon resin, a film-forming auxiliary agent, an antifreezing agent, a pigment, a filler, a pigment dispersant, a defoamer, a leveling agent, a rheology-adjusting agent, a preservative, an ultraviolet absorber, an antioxidant, a matting agent, a lubricant, a vulcanizing agent, or the like can be added, if necessary.

The nonflammable sheet 1 in the present embodiment has a heat-shielding property which is considered to be derived from titanium oxide or the like in the resin layer 3, can exhibit high weather resistance derived from fluorine and silicon, and has high contamination resistance by controlling a balance between hydrophobicity and hydrophilicity on a surface thereof. In heat-shielding applications, a retention ratio of heat-shielding performance can be improved by contamination resistance, the nonflammable sheet 1 can be manufactured only by a drying step without firing at normal temperature for film formation by containing an acrylic, and the nonflammable sheet 1 is an aqueous resin using no solvent. Therefore, the nonflammable sheet 1 can reduce an influence on environment.

Hereinafter, experimental examples in the present invention will be described.

As described below, the first and second fluorocarbon resins were prepared, and a plurality of fluorocarbon resin liquids was prepared so as to have respective viscosities by diluting the first and second fluorocarbon resins with water, if necessary.

First fluorocarbon resin: ZEFFLE heat-shielding coating material white (fluorine acrylic emulsion manufactured by Daikin Industries Co., Ltd.) formed of 20 parts by weight of a vinylidene fluoride copolymer, 10 parts by weight of an acrylic copolymer, and 20 parts by weight of titanium oxide

Second fluorocarbon resin: SIFCLEAR (fluorine acrylic emulsion manufactured by JSR Corporation) in which a vinylidene fluoride polymer and an acrylic polymer are compatible with each other at a molecular level

Table 3 indicates blending ratios of these components by numerical values.

As indicated in Table 3, a nonflammable sheet was manufactured so as to have a thickness indicated in Table 3 by preparing a plurality of kinds of glass fibers, making the glass fibers impregnated with a fluorocarbon resin liquid, and drying the glass fibers at 150°C for one minute.

In Table 3, glass cloth (glass fiber) is indicated by the number of a glass fiber product manufactured by Arisawa Manufacturing Co., Ltd. These cloths have a thickness of about 0.1 to 0.19 µm and a mass per unit area of about 100 to 220 g/m². As an example, a plainly woven glass cloth (manufactured by Arisawa Manufacturing Co., Ltd.: "1031NT" or the like) having a yarn diameter of about 7 µm or 9 µm, a vertical density of 62 yarns/25 mm, a horizontal density of 58 yarns/25 mm, a thickness of 0.1 mm, and a mass of 108.5 g/cm³ was impregnated with a fluorocarbon resin liquid in an impregnation tank at a line speed of 10 m/min while a tension was maintained at 3 kg/cm² using a tension controller in a line having a layout illustrated in FIG. 2, and was pulled up. Thereafter, front and back surfaces of the glass cloth were scraped using a steel scraping knife (doctor blade) at an angle of 60 degrees, and was dried at 150°C for one minute through a dryer having a length of 5 m in the line to obtain the fluorocarbon resin sheet of the present invention. The application amount after drying was 55.8 g/m².

The application amount or the like was controlled by tension on the glass fiber woven fabric 2, viscosity of the fluorocarbon resin liquid 13, and an angle formed by the doctor blades 16.

Viscosity was measured by a method for measuring viscosity of a liquid according to JISZ8803.

A thickness was measured according to a technical standard for a building, a film material, and the like in a film structure and a method described in "reference values for other qualities" in the standard. Measurement was performed at an intersection portion of basic fabric fiber yarns. Measurement was performed using a JISB7503 standard dial gauge as a measuring apparatus.

As a comparative example, a mixed liquid of a 12% by weight ultrafine particle-shaped anhydrous silica powder aqueous dispersion obtained by adding and mixing a nonionic surfactant formed of a polyoxyalkylene dimethylpolysiloxane copolymer to a 12% by weight ultrafine particle-shaped anhydrous silica powder (Aerosil MOX80 manufactured by Nippon Aerosil Co., Ltd., average particle diameter 30 mµm) aqueous dispersion at a ratio of 20% by weight of the polyoxyalkylene dimethylpolysiloxane copolymer with respect to the weight of the silica powder, and a 12% by weight PFA aqueous dispersion obtained by diluting a 30% by weight PFA aqueous dispersion (manufactured by Du Pont-Mitsui Fluorochemicals Co. Ltd, average particle diameter 0.17 µm) with pure water to 12% by weight and adding and mixing a polyoxyalkylene dimethylpolysiloxane copolymer to the diluted product at a ratio of 20% by weight of the polyoxyalkylene dimethylpolysiloxane copolymer with respect to the weight of the PFA, having a mixing weight ratio of 40/60, was obtained. This mixed liquid was applied on one surface of a fluorine-containing resin tent film (FGT-600 manufactured by Chukoh Chemical Industries, Ltd., glass fiber woven fabric having a diameter of 3 µm impregnated with PTFE) by a brush, was dried at room temperature, and was then fired at 360°C for ten minutes to form a hydrophilic layer on a surface of the fluorine-containing resin tent film. Table 3 indicates an application amount and a thickness.

**Table 3**

| Comparative Example | PTFE Saint-Gobain "Fabrasorb 11" | | | | | | 220 |
|---|---|---|---|---|---|---|---|
| Example | Glass cloth | ZEFFLE heat shielding coating material white | SIFCLEAR F101 | Diluted with water | Viscosity (20 rpm) | Application amount (g/m²) | Thickness (*µ*m) |
| 1 | 1031NT | 10 | 0 | Not diluted | 5863 | 149 | 105 |
| 2 | M7628 | 10 | 0 | Not diluted | 5863 | 300 | 220 |
| 3 | 1031NT | 10 | 0 | Diluted | 1500 | 129 | 96 |
| 4 | M7628 | 10 | 0 | Diluted | 1500 | 254 | 190 |
| 5 | 1031NT | 7 | 3 | Not diluted | 5843 | 159 | 100 |
| 6 | M7628 | 7 | 3 | Not diluted | 5843 | 290 | 200 |
| 7 | 1031NT | 7 | 3 | Diluted | 1500 | 128 | 96 |
| 8 | M7628 | 7 | 3 | Diluted | 1500 | 257 | 196 |
| 9 | 1031NT | 5 | 5 | Not diluted | 2837 | 174 | 100 |
| 10 | M7628 | 5 | 5 | Not diluted | 2837 | 284 | 197 |
| 11 | 1031NT | 5 | 5 | Diluted | 1500 | 167 | 96 |
| 12 | M7628 | 5 | 5 | Diluted | 1500 | 269 | 195 |
| 13 | 1031NT | 3 | 7 | Not diluted | 853 | 139 | 96 |
| 14 | M7628 | 3 | 7 | Not diluted | 853 | 280 | 200 |
| 15 | 1031NT | 0 | 10 | Not diluted | 317 | 137 | 99 |
| 16 | M7628 | 0 | 10 | Not diluted | 317 | 320 | 215 |

The following performance tests were performed for these experimental examples. Table 4 indicates results thereof.

**Table 4**

| Comparative Example | Flexibility | With/without fold | 1.05 | 0 | 119.99 | 16. 25 | 922.25 | | With/without significant discoloration | |
|---|---|---|---|---|---|---|---|---|---|---|
| Example | Functional test | | Combustion test | | Tensile strength (N/cm) | Tear strength (N) | Elastic modulus (MPa) | Weather resistance (408H) | | |
| | Tactile | 180°C folding | Total amount of heat generation (MJ/m²) | Continuous time exceeding 200 k | | | | | | |
| 1 | Flexible | With fold | 0.56 | 0 | 148.67 | 19.78 | 6453. 08 | Without significant discoloration | | |
| 2 | Flexible | With fold | 2.66 | 0 | 185.59 | 38.71 | 2962. 66 | Without signifiant discoloration | | |
| 3 | Flexible | With fold | 1.21 | 0 | 106.33 | 16.51 | 5193.21 | Without significant discoloration | | |
| 4 | Slightly hard | With fold | 0.23 | 0 | 158.04 | 29.91 | 2932. 74 | Without significant discoloration | | |
| 5 | Flexible | With fold | 0.76 | 0 | 101.25 | 13. 80 | 6146.81 | Without significant discoloration | | |
| 6 | Slightly hard | With fold | 1.35 | 0 | 262.32 | 34.49 | 4149.17 | Without significant discoloration | | |
| 7 | Flexible | With fold | 0.43 | 0 | 107.04 | 14.07 | 4917.15 | Without significant discoloration | | |
| 8 | Slightly hard | With fold | 0.47 | 0 | 155.80 | 32.57 | 3152.59 | Without significant discoloration | | |
| 9 | Flexible | With fold | 2.44 | 0 | 123.50 | 20.09 | 4426.30 | | Without significant discoloration | |
| 10 | Slightly hard | With fold | 1.55 | 0 | 230.92 | 36.50 | 3801.61 | Without significant discoloration | | |
| 11 | Flexible | With fold | 1.84 | 0 | 171.46 | 19.28 | 6373.23 | Without significant discoloration | | |
| 12 | Slightly hard | With fold | 2.2 | 0 | 260.52 | 33.64 | 3880.28 | Without significant discoloration | | |
| 13 | Flexible | With fold | 2.11 | 0 | 115.35 | 14.34 | 3949.59 | Without significant discoloration | | |
| 14 | Slightly hard | With fold | 2.71 | 0 | 211.17 | 33.39 | 3739. 73 | | Without significant discoloration | |
| 15 | Flexible | With fold | 0.53 | 0 | 181.88 | 32. 76 | 6573.45 | Without significant discoloration | | |
| 16 | Slightly hard | With fold | 2.77 | 0 | 322.43 | 71.64 | 3175. 67 | Without significant discoloration | | |

### <Functional test and tactile>

A sheet was cut into an A4 size, and was then folded so as to have a loop shape. Evaluation was performed by regarding a case in which a repelling force was strong as being hard, a case in which a repelling force was weak as being flexible, and a case in which a repelling force was between strong and weak as being slightly hard.

### <Functional test and 180° folding>

A sheet cut into a size of 5 cm × 10 cm was folded so as to have a loop shape. Thereafter, the sheet was sandwiched by two upper and lower acrylic plates, and was completely folded such that upper and lower portions of the sheet were in contact with each other. Thereafter, evaluation was performed visually by observing whether a fold or a material fracture was present in the sheet.

### <Combustion test>

A combustion test was performed by an ISO5660 exothermic test method cone calorie measuring method. A value of 8 or less passes a nonflammability certification test.

### <Tensile strength>

Tensile strength was measured by a JISK7161: 1994 plastic tensile test method.

### <Tear strength>

Tear strength was measured by a JISK77128-3 plastic-film and sheet tear strength test method right angle tear method.

### <Elastic modulus>

Elastic modulus was measured by a JISK7161: 1994 plastic tensile test method.

### <Weather resistance>

A long-term weather resistance test was performed by metal weather manufactured by Daipla Wintes Co., Ltd.

Test conditions were illuminance of 65 mW/cm², a black panel temperature of 53°C, conditions during LIGHT irradiation (53°C/70% RH/20 hours), DEW condensation conditions (30°C/98% RH/4 hours), and shower for 30 seconds after the LIGHT. One cycle spent 24 hours.

A test was performed for 408 hours. Thereafter, evaluation was performed visually by observing whether there was significant discoloration, damage, or the like.

Results in Table 2 indicate that the nonflammable sheet of the present invention can improve weather resistance, a heat-shielding property, hydrophilicity, a nonflammable property, chemical resistance, flexibility, a handling property, and a surface printing excellent characteristic.

### INDUSTRIAL APPLICABILITY

Application examples of the present invention include various tents, a warehouse tent, a roof material, a ceiling material, a simple dome for an entertainment facility, a sport facility, a domed stadium, a house for agriculture or a flower bed, a school and park facility, and a transportation hood sheet. The present invention has a wide range of applications.

### DESCRIPTION OF THE REFERENCE SYMBOLS

1: nonflammable sheet
2: nonflammable fiber woven fabric
3: resin layer

## Claims

1. A nonflammable sheet (1), comprising a resin layer (3) formed on a surface of the woven fabric (2), wherein
the woven fabric (2) is formed of a nonflammable fiber,
the resin layer (3) comprises at least a first fluorocarbon resin and a second fluorocarbon resin,
the first fluorocarbon resin comprises a vinylidene fluoride copolymer and an acrylic copolymer,
the second fluorocarbon resin comprises a vinylidene fluoride polymer, a siloxane polymer, and a crosslinked acrylic polymer,
wherein
the second fluorocarbon resin is formed of an aqueous dispersion containing a composite polymer particle (I) and a composite polymer particle (II),
the composite polymer particle (I) is obtained by mixing and emulsifying the following component (A), a radically polymerizable monomer (B), an emulsifier (C), and a hydrolysis catalyst (D) for the component (A) in an aqueous medium to cause a hydrolysis-condensation reaction of the component (A) to proceed, then fining the emulsion, then adding a radical polymerization initiator (E) thereto to cause a reaction, and causing a polymerization reaction of the component (B) to proceed,
the composite polymer particle (II) is a polymer particle of a fluorine-containing polymer and a (meth)acrylic polymer;
(A): at least one selected from the group consisting of organosilane represented by the following general formula (3-1), a hydrolyzate of the organosilane, and a partial condensate of the hydrolysate;
(R¹)ₙ-Si-(OR²)₄₋ₙ (3-1)
in the formula, R¹ is a monovalent organic group having 1 to 8 carbon atoms, two R¹s may be the same as or different from each other, R² is a linear or branched alkyl group having 1 to 5 carbon atoms or an acyl group having 1 to 6 carbon atoms, two R²s may be the same as or different from each other, and n is an integer of 0 to 2.

2. The nonflammable sheet (1) according to claim 1, wherein the first fluorocarbon resin comprises titanium oxide.

3. The nonflammable sheet (1) according to claim 1 or 2, wherein thickness of the nonflammable sheet (1) is approximately 100 to 200 µm.

4. The nonflammable sheet (1) according to any one of claims 1 to 3, wherein
the composite polymer particle (II) is a homogeneous type polymer particle (ii) in which the fluorine-containing polymer and the (meth)acrylic polymer are uniformly compatible with each other in a single particle.

5. The nonflammable sheet (1) according to any one of claims 1 to 4, wherein
the composite polymer particle (II) contains a copolymer particle of a radically polymerizable fluorine-containing monomer and a (meth)acrylic monomer.

6. The nonflammable sheet (1) according to any one of claims 1 to 5, wherein a ratio between the composite polymer particle (I) and the composite polymer particle (II) is 90/10 to 10/90.

7. A method for manufacturing a nonflammable sheet (1, 18), wherein a resin layer is formed by impregnating a woven fabric formed of a nonflammable fiber with a resin,
the resin comprises a first fluorocarbon resin and a second fluorocarbon resin,
the first fluorocarbon resin comprises a vinylidene fluoride copolymer and an acrylic copolymer,
the second fluorocarbon resin comprises a vinylidene fluoride polymer, a siloxane polymer, and a crosslinked acrylic polymer,
the second fluorocarbon resin is formed of an aqueous dispersion containing a composite polymer particle (I) and a composite polymer particle (II),
the composite polymer particle (I) is obtained by mixing and emulsifying the following component (A), a radically polymerizable monomer (B), an emulsifier (C), and a hydrolysis catalyst (D) for the component (A) in an aqueous medium to cause a hydrolysis-condensation reaction of the component (A) to proceed, then fining the emulsion, then adding a radical polymerization initiator (E) thereto to cause a reaction, and causing a polymerization reaction of the component (B) to proceed,
the composite polymer particle (II) is a polymer particle of a fluorine-containing polymer and a (meth)acrylic polymer;
(A): at least one selected from the group consisting of organosilane represented by the following general formula (3-1), a hydrolyzate of the organosilane, and a partial condensate of the hydrolysate;
(R¹)ₙ-Si-(OR²)₄₋ₙ (3-1)
in the formula, R¹ is a monovalent organic group having 1 to 8 carbon atoms, two R¹s may be the same as or different from each other, R² is a linear or branched alkyl group having 1 to 5 carbon atoms or an acyl group having 1 to 6 carbon atoms, two R²s may be the same as or different from each other, and n is an integer of 0 to 2.

8. The method for manufacturing a nonflammable sheet (1, 18) according to claim 7, wherein the first fluorocarbon resin comprises titanium oxide.

9. The method for manufacturing a nonflammable sheet (1, 18) according to Claim 7 or 8, wherein a thickness of the nonflammable sheet (1, 18) is approximately 100 to 200 µm.

10. The method for manufacturing a nonflammable sheet (1, 18) according to any one of claims 7 to 9, wherein the polymer particle (II) is a homogeneous type in which the fluorine-containing polymer and the (meth)acrylic polymer are uniformly compatible with each other in a single particle.

11. The method for manufacturing a nonflammable sheet (1, 18) according to any one of claims 7 to 10, wherein the polymer particle (II) contains a copolymer particle of a radically polymerizable fluorine-containing monomer and a (meth)acrylic monomer.

12. The method for manufacturing a nonflammable sheet (1, 18) according to any one of claims 7 to 11, wherein a ratio between the polymer particle (I) and the polymer particle (II) is 90/10 to 10/90.

## Patentansprüche

1. Nicht entflammbare Folie (1), umfassend eine Harzschicht (3), die auf einer Oberfläche des Gewebes (2) gebildet ist, wobei
das Gewebe (2) aus einer nicht entflammbaren Faser gebildet ist,
die Harzschicht (3) zumindest ein erstes Fluorkohlenstoffharz und ein zweites Fluorkohlenstoffharz umfasst,
wobei das erste Fluorkohlenstoffharz ein Vinylidenfluorid-Copolymer und ein Acryl-Copolymer umfasst,
das zweite Fluorkohlenstoffharz ein Vinylidenfluorid-Polymer, ein Siloxan-Polymer und ein vernetztes Acryl-Polymer umfasst,
wobei
das zweite Fluorkohlenstoffharz aus einer wässrigen Dispersion gebildet ist, die ein Verbundpolymerteilchen (I) und ein Verbundpolymerteilchen (II) enthält,
das Verbundpolymerteilchen (I) erhalten ist durch Mischen und Emulgieren der folgende Komponente (A), eines radikalisch polymerisierbaren Monomer (B), eines Emulgators (C) und eines Hydrolysekatalysators (D) für die Komponente (A) in einem wässrigen Medium, um ein Voranschreiten einer Hydrolyse-Kondensationsreaktion der Komponente (A) zu bewirken, dann Verfeinern der Emulsion, dann Zugeben eines Radikalpolymerisationsinitiator (E), um eine Reaktion zu bewirken, und Bewirken des Voranschreitens einer Polymerisationsreaktion der Komponente (B),
das Verbundpolymerteilchen (II) ein Polymerteilchen aus einem fluorhaltigen Polymer und einem (Meth)acrylpolymer ist;
(A): mindestens eines ausgewählt aus der Gruppe bestehend aus durch die folgende allgemeine Formel (3-1) dargestelltem Organosilan, einem Hydrolysat des Organosilans und einem Teilkondensat des Hydrolysats;
**(R¹)ₙ-Si-(OR²)₄₋ₙ** (3-1)
wobei in der Formel R¹ eine einwertige organische Gruppe mit 1 bis 8 Kohlenstoffatomen ist, wobei zwei R¹ gleich oder verschieden voneinander sein können, R² eine lineare oder verzweigte Alkylgruppe mit 1 bis 5 Kohlenstoffatomen oder eine Acylgruppe mit 1 bis 6 Kohlenstoffatomen ist, zwei R² gleich oder verschieden voneinander sein können, und n eine ganze Zahl von 0 bis 2 ist.

2. Nicht entflammbare Folie (1) nach Anspruch 1, wobei das erste Fluorkohlenstoffharz Titanoxid umfasst.

3. Nicht entflammbare Folie (1) nach Anspruch 1 oder 2, wobei die Dicke der nicht entflammbaren Folie (1) etwa 100 bis 200 µm beträgt.

4. Nicht entflammbare Folie (1) nach einem der Ansprüche 1 bis 3, wobei
das Verbundpolymerteilchen (II) ein Polymerteilchen (ii) vom homogenen Typ ist, in dem das fluorhaltige Polymer und das (Meth)acrylpolymer in einem einzigen Teilchen gleichmäßig miteinander kompatibel sind.

5. Nicht entflammbare Folie (1) nach einem der Ansprüche 1 bis 4, wobei
das Verbundpolymerteilchen (II) ein Copolymerteilchen aus einem radikalisch polymerisierbaren fluorhaltigen Monomer und einem (Meth)acrylmonomer enthält.

6. Nicht entflammbare Folie (1) nach einem der Ansprüche 1 bis 5, wobei das Verhältnis zwischen dem Verbundpolymerteilchen (I) und dem Verbundpolymerteilchen (II) 90/10 bis 10/90 beträgt.

7. Verfahren zur Herstellung einer nicht entflammbaren Folie (1, 18), wobei eine Harzschicht durch Imprägnieren eines aus einer nicht entflammbaren Faser gebildeten Gewebes mit einem Harz gebildet wird,
das Harz ein erstes Fluorkohlenstoffharz und ein zweites Fluorkohlenstoffharz umfasst,
das erste Fluorkohlenstoffharz umfasst ein Vinylidenfluorid-Copolymer und ein Acryl-Copolymer,
das zweite Fluorkohlenstoffharz ein Vinylidenfluorid-Polymer, ein Siloxan-Polymer und ein vernetztes Acryl-Polymer umfasst,
das zweite Fluorkohlenstoffharz aus einer wässrigen Dispersion gebildet ist, die ein Verbundpolymerteilchen (I) und ein Verbundpolymerteilchen (II) enthält,
das Verbundpolymerteilchen (I) erhalten wird durch Mischen und Emulgieren der folgende Komponente (A), eines radikalisch polymerisierbaren Monomer (B), eines Emulgators (C) und eines Hydrolysekatalysators (D) für die Komponente (A) in einem wässrigen Medium, um ein Voranschreiten einer Hydrolyse-Kondensationsreaktion der Komponente (A) zu bewirken, dann Verfeinern der Emulsion, dann Zugeben eines Radikalpolymerisationsinitiator (E), um eine Reaktion zu bewirken, und Bewirken des Voranschreitens einer Polymerisationsreaktion der Komponente (B),
das Verbundpolymerteilchen (II) ein Polymerteilchen aus einem fluorhaltigen Polymer und einem (Meth)acrylpolymer ist;
(A): mindestens eines ausgewählt aus der Gruppe bestehend aus durch die folgende allgemeine Formel (3-1) dargestelltem Organosilan, einem Hydrolysat des Organosilans und einem Teilkondensat des Hydrolysats;
**(R¹)ₙ-Si-(OR²)₄₋ₙ** (3-1)
wobei in der Formel R¹ eine einwertige organische Gruppe mit 1 bis 8 Kohlenstoffatomen ist, wobei zwei R¹ gleich oder verschieden voneinander sein können, R² eine lineare oder verzweigte Alkylgruppe mit 1 bis 5 Kohlenstoffatomen oder eine Acylgruppe mit 1 bis 6 Kohlenstoffatomen ist, zwei R² gleich oder verschieden voneinander sein können, und n eine ganze Zahl von 0 bis 2 ist.

8. Verfahren zur Herstellung einer nicht entflammbaren Folie (1, 18) nach Anspruch 7, wobei das erste Fluorkohlenstoffharz Titanoxid umfasst.

9. Verfahren zur Herstellung einer nicht entflammbaren Folie (1, 18) nach Anspruch 7 oder 8, wobei eine Dicke der nicht entflammbaren Folie (1, 18) etwa 100 bis 200 µm beträgt.

10. Verfahren zur Herstellung einer nicht entflammbaren Folie (1, 18) nach einem der Ansprüche 7 bis 9, wobei das Polymerteilchen (II) ein homogener Typ ist, bei dem das fluorhaltige Polymer und das (Meth)acrylpolymer in einem einzigen Teilchen gleichmäßig miteinander kompatibel sind.

11. Verfahren zur Herstellung einer nicht entflammbaren Folie (1, 18) nach einem der Ansprüche 7 bis 10, wobei das Polymerteilchen (II) ein Copolymerteilchen aus einem radikalisch polymerisierbaren fluorhaltigen Monomer und einem (Meth)acrylmonomer enthält.

12. Verfahren zur Herstellung einer nicht entflammbaren Folie (1, 18) nach einem der Ansprüche 7 bis 11, wobei ein Verhältnis zwischen dem Polymerteilchen (I) und dem Polymerteilchen (II) 90/10 bis 10/90 beträgt.

## Revendications

1. Feuille ininflammable (1), comprenant une couche de résine (3) formée sur une surface de l'étoffe tissée (2), dans laquelle
l'étoffe tissée (2) est formée d'une fibre ininflammable, la couche de résine (3) comprend au moins une première résine fluorocarbonée et une deuxième résine fluorocarbonée,
la première résine fluorocarbonée comprend un copolymère de fluorure de vinylidène et un copolymère acrylique,
la deuxième résine fluorocarbonée comprend un polymère de fluorure de vinylidène, un polymère de siloxane, et un polymère acrylique réticulé,
dans laquelle
la deuxième résine fluorocarbonée est formée d'une dispersion aqueuse contenant une particule polymère composite (I) et une particule polymère composite (II),
la particule polymère composite (I) est obtenue par mélange et émulsification du composant (A) qui suit, d'un monomère polymérisable par voie radicalaire (B), d'un émulsionnant (C), et d'un catalyseur d'hydrolyse (D) pour le composant (A) dans un milieu aqueux pour amener une réaction d'hydrolyse-condensation du composant (A) à se dérouler, puis la clarification de l'émulsion, puis l'addition d'un amorceur de polymérisation radicalaire (E) à celle-ci pour provoquer une réaction, après quoi une réaction de polymérisation du composant (B) est amenée à se dérouler,
la particule de polymère composite (II) est une particule de polymère d'un polymère fluoré et d'un polymère (méth)acrylique ;
(A) : au moins l'un choisi dans l'ensemble constitué par un organosilane représenté par la formule générale (3-1) qui suit, un hydrolysat de l'organosilane, et un condensat partiel de l'hydrolysat ;
**(R¹)ₙ-Si-(OR²)₄₋ₙ** (3-1)
dans la formule, R¹ est un groupe organique monovalent ayant 1 à 8 atomes de carbone, deux R¹ peuvent être identiques ou différents, R² est un groupe alkyle linéaire ou ramifié ayant 1 à 5 atomes de carbone ou un groupe acyle ayant 1 à 6 atomes de carbone, deux R² peuvent être identiques ou différents, et n est un entier de 0 à 2.

2. Feuille ininflammable (1) selon la revendication 1, dans laquelle la première résine fluorocarbonée comprend de l'oxyde de titane.

3. Feuille ininflammable (1) selon la revendication 1 ou 2, dans laquelle l'épaisseur de la feuille ininflammable (1) est d'environ 100 à 200 µm.

4. Feuille ininflammable (1) selon l'une quelconque des revendications 1 à 3, dans laquelle
la particule de polymère composite (II) est une particule de polymère de type homogène (ii) dans laquelle le polymère fluoré et le polymère (méth)acrylique sont uniformément compatibles l'un avec l'autre dans une seule particule.

5. Feuille ininflammable (1) selon l'une quelconque des revendications 1 à 4, dans laquelle
la particule polymère composite (II) contient une particule de copolymère d'un monomère fluoré polymérisable par voie radicalaire et d'un monomère (méth)acrylique.

6. Feuille ininflammable (1) selon l'une quelconque des revendications 1 à 5, dans laquelle le rapport entre la particule de polymère composite (I) et la particule de polymère composite (II) est de 90/10 à 10/90.

7. Procédé pour fabriquer une feuille ininflammable (1, 18), dans lequel une couche de résine est formée par imprégnation d'une étoffe tissée formée d'une fibre ininflammable avec une résine,
la résine comprend une première résine fluorocarbonée et une deuxième résine fluorocarbonée,
la première résine fluorocarbonée comprend un copolymère de fluorure de vinylidène et un copolymère acrylique,
la deuxième résine fluorocarbonée comprend un polymère de fluorure de vinylidène, un polymère de siloxane, et un polymère acrylique réticulé,
la deuxième résine fluorocarbonée est formée d'une dispersion aqueuse contenant une particule polymère composite (I) et une particule polymère composite (II),
la particule polymère composite (I) est obtenue par mélange et émulsification du composant (A) qui suit, d'un monomère polymérisable par voie radicalaire (B), d'un émulsionnant (C), et d'un catalyseur d'hydrolyse (D) pour le composant (A) dans un milieu aqueux pour amener une réaction d'hydrolyse-condensation du composant (A) à se dérouler, puis la clarification de l'émulsion, puis l'addition d'un amorceur de polymérisation radicalaire (E) à celle-ci pour provoquer une réaction, après quoi une réaction de polymérisation du composant (B) est amenée à se dérouler,
la particule de polymère composite (II) est une particule de polymère d'un polymère fluoré et d'un polymère (méth)acrylique ;
(A) : au moins l'un choisi dans l'ensemble constitué par un organosilane représenté par la formule générale (3-1) qui suit, un hydrolysat de l'organosilane, et un condensat partiel de l'hydrolysat ;
**(R¹)ₙ-Si-(OR²)₄₋ₙ** (3-1)
dans la formule, R¹ est un groupe organique monovalent ayant 1 à 8 atomes de carbone, deux R¹ peuvent être identiques ou différents, R² est un groupe alkyle linéaire ou ramifié ayant 1 à 5 atomes de carbone ou un groupe acyle ayant 1 à 6 atomes de carbone, deux R² peuvent être identiques ou différents, et n est un entier de 0 à 2.

8. Procédé pour fabriquer une feuille ininflammable (1, 18) selon la revendication 7, dans lequel la première résine fluorocarbonée comprend de l'oxyde de titane.

9. Procédé pour fabriquer une feuille ininflammable (1, 18) selon la revendication 7 ou 8, dans lequel l'épaisseur de la feuille ininflammable (1, 18) est d'environ 100 à 200 µm.

10. Procédé pour fabriquer une feuille ininflammable (1, 18) selon l'une quelconque des revendications 7 à 9, dans lequel la particule de polymère composite (II) est d'un type homogène dans lequel le polymère fluoré et le polymère (méth)acrylique sont uniformément compatibles l'un avec l'autre dans une seule particule.

11. Procédé pour fabriquer une feuille ininflammable (1, 18) selon l'une quelconque des revendications 7 à 10, dans lequel la particule polymère composite (II) contient une particule de copolymère d'un monomère fluoré polymérisable par voie radicalaire et d'un monomère (méth)acrylique.

12. Procédé pour fabriquer une feuille ininflammable (1, 18) selon l'une quelconque des revendications 7 à 11, dans lequel le rapport entre la particule de polymère composite (I) et la particule de polymère composite (II) est de 90/10 à 10/90.
